(19) Europäisches Patentamt
European Patent Office
Office européen des brevets

(11) **EP 2 937 255 B1**

(12) **EUROPEAN PATENT SPECIFICATION**

(45) Date of publication and mention
of the grant of the patent:
**19.12.2018 Bulletin 2018/51**

(51) Int Cl.:
**B60W 40/112** *(2012.01)*    **B60W 40/11** *(2012.01)*
B60W 50/00 *(2006.01)*    B60W 50/02 *(2012.01)*

(21) Application number: **15163918.4**

(22) Date of filing: **16.04.2015**

(54) **ROLL ANGLE ESTIMATION DEVICE AND TRANSPORT APPARATUS**

VORRICHTUNG ZUR ROLLWINKELSCHÄTZUNG UND TRANSPORTVORRICHTUNG

DISPOSITIF D'ESTIMATION D'ANGLE DE ROULIS ET APPAREIL DE TRANSPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.04.2014 JP 2014091519**

(43) Date of publication of application:
**28.10.2015 Bulletin 2015/44**

(73) Proprietor: **Yamaha Hatsudoki Kabushiki Kaisha
Iwata-shi, Shizuoka-ken 438-8501 (JP)**

(72) Inventor: **Fujii, Takahiro
Shizuoka-ken, Shizuoka 438-8501 (JP)**

(74) Representative: **Moreland, David
Marks & Clerk LLP
Aurora
120 Bothwell Street
Glasgow G2 7JS (GB)**

(56) References cited:
**EP-A1- 2 517 941        EP-A2- 1 002 709
US-A1- 2010 168 958    US-A1- 2011 040 464
US-B1- 6 192 305**

**Description**

**FIELD OF INVENTION**

The present invention relates to a roll angle estimation device, e.g. for estimating a roll angle of a moving body, such as a straddle-type vehicle or saddle-ride type vehicle or a vehicle body of a straddle-type vehicle or saddle-ride type vehicle. The invention also relates to a transport apparatus, such as a straddle-type or saddle-ride vehicle.

**BACKGROUND TO INVENTION**

Various estimation devices for estimating the roll angle of a vehicle such as a saddle-ride or straddle-type vehicle, e.g. a motorcycle, have conventionally been proposed. For example, by controlling the orientation of a headlight based on a roll angle which is estimated by an estimation device, it becomes possible to radiate light in an appropriate direction with the headlight, regardless of vehicle inclination.

JP 2009-73466 (Toyota Central Res & Dev) describes a vehicle attitude estimation apparatus, in which a roll angle and a pitch angle are estimated based on detected values of longitudinal acceleration, lateral acceleration, vertical acceleration, yaw acceleration, and roll angular velocity of the vehicle motion, as well as an estimated value of longitudinal vehicle speed and an estimated value of pitch angular velocity.

However, conventional estimation devices require an improvement in accuracy of the estimation of the vehicle roll angle. For example, the headlight orientation may become tilted even though the vehicle is not inclined.

US 2011/0040464 (TOYOTA) discloses a sensor drift amount estimating device. On the basis of a sensor signal corresponding to a detected value of a motion state amount of vehicle motion, an attitude angle estimating means of a sensor drift amount estimating device computes a derivative amount of the attitude angle, and estimates the attitude angle. On the basis of the sensor signal and the attitude angle estimated by the attitude angle estimating means, a computing means computes a derivative amount of the attitude angle obtained from equations of motion for vehicle motion. A drift amount estimating means estimates a sensor drift amount of the sensor signal by using a relationship that, when taking a sensor drift amount of the sensor signal into consideration, the derivative amount of the attitude angle computed by the attitude angle estimating means, and a value that considers a sensor drift amount in the derivative amount of the attitude angle computed by the computing means, are equal.

EP 2 517 941 (YAMAHA) discloses a roll angle estimation device and transport equipment. A Kalman filter in a roll angle estimation device estimates a roll angle of a vehicle body, a vehicle speed, a roll angular velocity sensor offset, a yaw angular velocity sensor offset, and a vertical acceleration sensor offset on the basis of detected values of a roll angular velocity sensor, a yaw angular velocity sensor, a vertical acceleration sensor, a longitudinal acceleration sensor, a lateral acceleration sensor, and a rear-wheel speed sensor, and also on the basis of estimated values of the roll angle, the vehicle speed, the roll angular velocity sensor offset, the yaw angular velocity sensor offset, and the vertical acceleration sensor offset obtained in a previous estimation operation.

US 2010/0168958 (BAINO) discloses a bank angle detecting device and headlight device for a motorcycle. A bank angle detecting device includes a roll rate sensor for detecting an angular velocity $w_r$ about a longitudinal axis of the motorcycle; a yaw rate sensor for detecting an angular velocity $w_y$ about a vertical axis of the motorcycle; a bank angle detecting unit for detecting the motorcycle bank angle for calibration use based on the yaw rate and a travelling velocity and bank angle correcting unit for correcting the basic motorcycle bank angle $o_r$, determined from an output wr of the yaw rate sensor, so as to approach the motorcycle bank angle that is detected by the bank angle detecting unit, to thereby determine the estimated bank angle.

An object of at least one embodiment of the present invention is to provide a roll angle estimation device which is capable of estimating the roll angle of a moving body with an improved accuracy, and a transport apparatus including the same.

An object of at least one embodiment of at least one aspect of the present invention is to obviate or at least mitigate one or more problems or disadvantages in the prior art.

**SUMMARY OF INVENTION**

Various aspects of the present invention are defined in the independent claims. Some preferred features are defined in the dependent claims.

According to a first aspect of the present invention there is provided a roll angle estimation device for estimating a roll angle of a moving body, comprising:

first and second angular velocity detectors for detecting respective first and second angular velocities ($\omega_r$, $\omega_y$) around first and second axes extending along at least two mutually different directions;

first, second, and third acceleration detectors for detecting respective first,
second, and third accelerations along at least three mutually different directions;
a velocity information detector for detecting information concerning a moving velocity ($V_r$, $V_f$) of the moving body in a direction of travel; and
an estimation section (20) configured to estimate a roll angle, a pitch angle and a pitch angular velocity of the moving body and at least one offset error of the first and second angular velocity detectors and the first, second, and third acceleration detectors, wherein,
in a current estimation operation, the estimation section estimates the roll angle, pitch angle, and pitch angular velocity of the moving body and the at least one offset error, based on: detection values detected by the first and second angular velocity detectors; detection values detected by the first, second, and third acceleration detectors; a detection value detected by the velocity information detector; estimated values of the roll angle, pitch angle, and pitch angular velocity from a previous estimation operation; and an estimated value of the offset error from the previous estimation operation.

In the above roll angle estimation device, first and second angular velocities around first and second axes along at least two mutually different directions may be detected by the respective first and second angular velocity detectors. Moreover, first, second, and third accelerations along at least three mutually different directions may be respectively detected by the respective first, second, and third acceleration detectors. Furthermore, information relating to or concerning a moving velocity of a moving body in a direction of travel may be detected by the velocity detector. Then, the arithmetic circuitry or estimation section may estimate a roll angle of the moving body, and may estimate at least one offset error of the first and second angular velocity detectors and the first, second, and third acceleration detectors.

In this case, in a current or present estimation operation, the arithmetic circuitry or estimation section may estimate the roll angle, pitch angle, and/or pitch angular velocity of the moving body and may estimate the at least one offset error, based on one or more of detection values determined, measured or detected by the first and second angular velocity detectors, detection values determined, measured or detected by the first, second, and third acceleration detectors, a detection value determined, measured or detected by the velocity detector, estimated values of the roll angle, pitch angle, and pitch angular velocity resulting from a previous estimation operation, and/or an estimated value of the offset error resulting from the previous estimation operation.

Thus, a roll angle and also an offset error may be estimated. An estimated value of the offset error may be used for a next or subsequent estimation operation. This may compensate for a decrease in the accuracy of estimation of the roll angle by utilizing the roll angle, pitch angle, and pitch angular velocity of the moving body, and at least one offset error of the first and second angular velocity detectors and the first, second, and third acceleration detectors. As a result, the roll angle may be estimated with high or improved accuracy.

The first angular velocity detector may detect a roll angular velocity. The second angular velocity detector may detect a yaw angular velocity The first, second, and third acceleration detectors may detect respective first, second, and third accelerations along three mutually different directions.

In this case, roll angular velocity and yaw angular velocity may be detected by the respective first and second angular velocity detectors. Moreover, first, second, and third accelerations along mutually different first, second, and third directions may be detected by the respective first, second, and third acceleration detectors.

In the current or present estimation operation, the arithmetic circuitry or estimation section may estimate a pitch angle based on the estimated value of the pitch angular velocity from the previous estimation operation. The arithmetic circuitry or estimation section may estimate a pitch angular velocity based on the estimated value of the pitch angular velocity determined by or resulting from the previous estimation operation.

In the current or present estimation operation, the arithmetic circuitry or estimation section may estimate a pitch angle based on a value obtained by integrating the estimated value of the pitch angular velocity from the previous estimation operation over a time interval between the current or present estimation operation and the previous estimation operation. The arithmetic circuitry or estimation section may estimate a pitch angular velocity based on a value obtained by integrating the estimated value of the pitch angular velocity from the previous estimation operation with a constant containing a time constant.

The arithmetic circuitry may comprise a Kalman filter. In the current or present estimation operation, the Kalman filter may, estimate the roll angle, pitch angle, and/or pitch angular velocity of the moving body and may estimate the at least one offset error based on a relationship between one or more of: detection values measured, determined or detected by the first and second angular velocity detectors; detection values measured, determined or detected by the first, second, and third acceleration detectors; a detection value measured, determined or detected by the velocity detector; estimated values of the roll angle, pitch angle, and pitch angular velocity determined by or resulting from a previous estimation operation; and/or an estimated value of the offset error determined by or resulting from the previous estimation operation.

In this case, the arithmetic circuitry may be easily implemented by using a Kalman filter algorithm.

The Kalman filter may comprise a saturation limiting circuit. When any estimated value exceeds an upper limit value of a predetermined range, the saturation limiting circuit may, set the estimated value to the upper limit value. When any estimated value is lower than a lower limit value of the predetermined range, the saturation limiting circuit may set the estimated value to the lower limit value.

By limiting the learning or estimation range of offset errors, it may become possible to prevent or reduce deviation of learned values or estimated values into a range of errors which actually will not occur, whereby the accuracy of estimation of the roll angle may be further improved.

The saturation limiting circuit may set the estimated value to the upper limit value when any estimated value exceeds an upper limit value of a predetermined range. When any estimated value is lower than a lower limit value of the predetermined range, the saturation limiting circuit may set the estimated value to the lower limit value at least with respect to the estimated values of the roll angle, the pitch angle, and/or an offset error of the pitch angular velocity. By using estimated values of the offset errors of the roll angle, pitch angle, and pitch angular velocity for the next or subsequent estimation operation, the accuracy of estimation of the roll angle may be further improved.

The arithmetic circuitry or estimation section may include low-pass filters, which may receive outputs from the first and second angular velocity detectors, the first, second, and third accelerations detector, and/or the velocity detector. The arithmetic circuitry or estimation section may treat the outputs, which have been transmitted through the low-pass filters as the detection values of the respective first and second angular velocity detectors, the respective first, second, and third accelerations detector, and/or the respective velocity detector.

The moving body may comprise a front wheel and a rear wheel. The velocity detector may include a rear-wheel rotational speed detector. The rear-wheel rotational speed detector may detect a rotational speed of the rear wheel as the information. The arithmetic circuitry or estimation section of the roll angle estimation device may be configured to further estimate a moving velocity of the moving body. In the current or present estimation operation, the arithmetic circuitry or estimation section may estimate the roll angle of the moving body, the at least one offset error, and the moving velocity of the moving body, based on one or more of: the detection values determined, measured or detected by the first and second angular velocity detectors; the detection values determined, measured or detected by the first, second, and third acceleration detectors; a detection value determined, measured or detected by the rear-wheel speed detector; an estimated value of the roll angle determined by or resulting from a previous estimation operation; an estimated value of the offset error determined by or resulting from the previous estimation operation; and/or an estimated value of the moving velocity from the previous estimation operation.

The moving body may comprise a front wheel and a rear wheel. The velocity detector may include a front-wheel rotational speed detector. The front-wheel rotational speed detector may detect a rotational speed of the front wheel. The velocity detector may include a rear-wheel rotational speed arithmetic circuitry or rear-wheel rotational speed estimation section. The rear-wheel rotational speed arithmetic circuitry or rear-wheel rotational speed estimation section may estimate a rotational speed of the rear wheel from a detection value determined, measured or detected by the front-wheel rotational speed detector as the information. The arithmetic circuitry or estimation section of the roll angle estimation device may be configured to further estimate a moving velocity of the moving body. In the current or present estimation operation, the arithmetic circuitry; an estimated value of the roll angle determined by or resulting from a previous estimation operation; an estimated value of the offset error determined by or resulting from the previous estimation operation; and/or an estimated value of the moving velocity determined by or resulting from the previous estimation operation.

According to a second aspect of the present invention there is provided
a transport apparatus comprising:

   a body configured to be capable of moving;
   the roll angle estimation device according to the first aspect of the present invention for estimating a roll angle of the moving body; and
   a processing device configured to receive the roll angle estimated by the roll angle estimation device and to use the estimated roll angle for control functions of the transport apparatus.

The moving body may be, comprise or be comprised in a vehicle, such as a straddle-type vehicle or saddle-ride type vehicle. The moving body may be, comprise or be comprised in a vehicle body of a vehicle, such as a straddle-type vehicle or saddle-ride type vehicle.

The processing device may be, comprise or be comprised in a navigation system and/or a headlight driver.

In the above transport apparatus, the roll angle estimation device according to the first aspect may estimate the roll angle of the moving body with a higher or improved accuracy. As a result, with a higher or improved accuracy, the processing section may be able to carry out processing which may involve the roll angle.

An angular velocity detector may be more susceptible to offset errors than an acceleration detector. Therefore, an estimated value of the offset error of at least one of the first and second angular velocity detectors may be used for the next or subsequent estimation operation. As a result, the accuracy of the estimation of the roll angle may be sufficiently improved.

In a range where the roll angle of the moving body is small, acceleration of the moving body along the vertical direction may hardly change. When a detected value of such acceleration along the vertical direction is affected by the offset error of the first acceleration detector, changes in the detected value of the acceleration along the vertical direction may exert a large influence on the estimation of the roll angle. Therefore, the estimated value of the offset error of the first acceleration detector may be used in a next or subsequent estimation operation, to further improve the accuracy of the estimation of the roll angle in a range in which the roll angle may be small.

When the moving body turns in a small radius and with a low velocity, the rotational speed of the rear wheel may be closer to the moving velocity of the moving body than the rotational speed of the front wheel. Therefore, the roll angle of the moving body, at least one offset error, and/or the moving velocity of the moving body may be estimated with a high or improved accuracy by using a detected value of the rotational speed of the rear wheel.

When the moving body turns in a small radius and with a low velocity, the turning radius of the front wheel may become larger than the turning radius of the rear wheel. This may make the rotational speed of the front wheel detected by the front-wheel rotational speed detector higher than the rotational speed of the rear wheel. Accordingly, the rear-wheel rotational speed arithmetic circuitry or estimation section may estimate the rotational speed of the rear wheel from a detection value determined, measured or detected by the front-wheel rotational speed detector. Thus, when a front-wheel rotational speed detector is provided, the roll angle of the moving body, at least one offset error, and/or the moving velocity of the moving body may be estimated with a high or improved accuracy, similarly to the case where a rear-wheel rotational speed detector may be provided.

According to the present invention, the roll angle of a moving body may be estimated with a high or improved accuracy.

According to a third aspect of the present invention there is provided a method for estimating a roll angle of a moving body, the method comprising:

> providing a roll angle estimation device;
> detecting first and second angular velocities around first and second axes along at least two mutually different directions using respective first and second angular velocity detectors of the roll angle estimation device;
> detecting first, second, and third accelerations along at least three mutually different directions using respective first, second and third acceleration detectors of the roll angle estimation device;
> detecting information concerning a moving velocity ($V_r$, $V_f$) of the moving body in a direction of travel using a velocity information detector of the roll angle estimation device; and
> estimating a roll angle, a pitch angle and a pitch angular velocity of the moving body and at least one offset error of the first and second angular velocity detectors and the first, second, and third acceleration detectors using an estimation section (20) using an estimation section of the roll angle estimation device, wherein

in a current estimation operation, the estimation section estimates the roll angle, pitch angle, and pitch angular velocity of the moving body and the at least one offset error, based on: detection values detected by the first and second angular velocity detectors; detection values detected by the first, second, and third acceleration detectors; a detection value detected by the velocity information detector; estimated values of the roll angle, pitch angle, and pitch angular velocity from a previous estimation operation; and an estimated value of the offset error from the previous estimation operation.

These general and specific aspects of the present invention may be implemented using a system, a method, and a computer program, and any combination of systems, methods, and computer programs.

According to a fourth aspect there is provided a computer program or computer program product, wherein the computer program product is comprised in or programmed into a processing device, a transport apparatus according to the second aspect.

The computer program or computer program product may be embodied on a carrier medium, such as a tangible and/or non-transient carrier medium.

Additional benefits and advantages of the disclosed embodiments will be apparent from the specification and Figures. The benefits and/or advantages may be individually provided by the various embodiments and features of the specification and/or drawings, and need not all be provided in order to obtain one or more of the same.

## BRIEF DESCRIPTION OF DRAWINGS

An embodiment of the present invention will now be described, by way of example only, with reference to the accompanying drawings, which are:

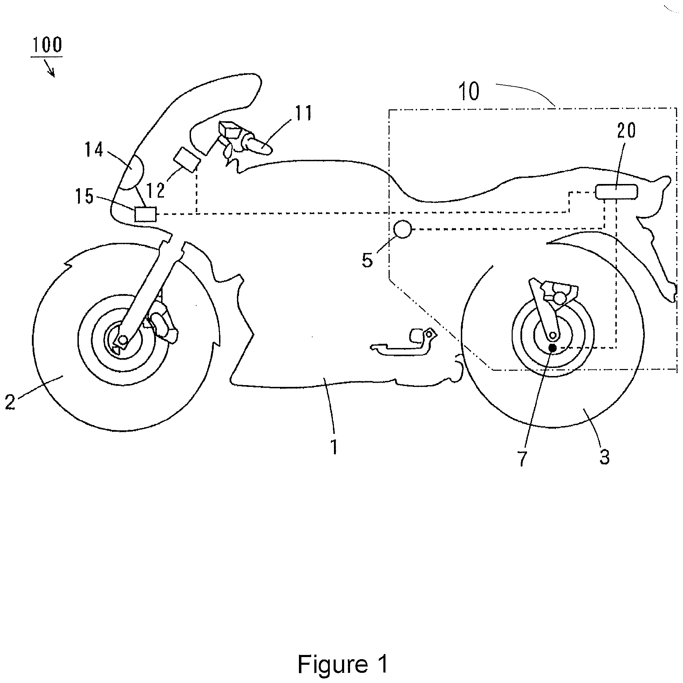

Figure 1                          a schematic diagram of a vehicle including a roll angle estimation device according to an embodiment of the present invention;

| | |
|---|---|
| Figure 2 | a block diagram showing the construction of a roll angle estimation device according to an embodiment of the present invention; |
| Figure 3 | a diagram showing the concept of a Kalman filter; |
| Figure 4(a) | a diagram describing a position at which a sensor group of the vehicle 100 is attached; |
| Figure 4(b) | a further diagram describing a position at which a sensor group of the vehicle 100 is attached; |
| Figure 5 | a vectorial representation of the attachment position of the sensor group; |
| Figure 6(a) | a diagram showing time transition of estimated values of the roll angle φ, as estimated by the roll angle estimation device; |
| Figure 6(b) | a diagram showing time transition of estimated values of the pitch angle θ, as estimated by the roll angle estimation device; |
| Figures 7(a), 7(b) and 7(c) | diagrams showing time transition of the respective estimated value of each parameter; |
| Figure 8 | a schematic diagram of a vehicle including a roll angle estimation device according to another embodiment of the present invention; |
| Figure 9 | a diagram illustrating turning radii of a front wheel and a rear wheel of a turning vehicle; and |
| Figure 10 | a diagram showing results of calculating a relationship between front-wheel speed and rear-wheel speed. |

## DETAILED DESCRIPTION OF DRAWINGS

Hereinafter, examples of applying roll angle estimation devices according to embodiments of the present invention to a vehicle, such as a saddled vehicle, saddle-ride vehicle or straddle-type vehicle, will be described.

Figure 1 is a schematic diagram showing a vehicle including a roll angle estimation device according to an embodiment of the present invention. The vehicle 100 in Figure 1 is a motorcycle, as an example of a straddle-type vehicle or saddle-ride type vehicle.

As shown in Figure 1, the vehicle 100 includes a vehicle body 1. A front wheel 2 is attached at the front of the vehicle body 1, and a rear wheel 3 is attached at the rear of the vehicle body 1. Moreover, a sensor group 5 is attached in the central portion of the vehicle body 1. Details of the sensor group 5 will be described below.

On the metal wheel of the rear wheel 3, a rear-wheel speed sensor 7 for detecting rotational speed of the rear wheel 3 is attached.

In an upper-front portion of the vehicle body 1, handle bars 11 are provided, which are capable of swinging or rotating right or left. A navigation system 12 is provided near the handle bars 11. Moreover, a headlight 14 and a headlight driver 15 are provided at the front of the vehicle body 1. The headlight driver 15 controls the orientation of the headlight 14. An electronic control unit (hereinafter abbreviated as the "ECU") 20 is provided at the rear of the vehicle body 1. For example, the ECU 20 is a hardware device, such as arithmetic circuitry or an estimation section, such as a computer, which includes, for example, one or more microprocessors, and one or more analog and/or digital filter device(s). The arithmetic circuitry carries out computer program codes or instructions to act as a machine or special purpose computer etc. The arithmetic circuitry functions as different components, such as a means or section(s) for implementing the functions/acts specified in the flowchart and/or block diagram block or blocks, by executing the computer program codes or instructions.

Output signals from the sensor group 5 and the rear-wheel speed sensor 7 are supplied to the ECU 20. The ECU 20 controls the elements of the vehicle body 1 and estimates the roll angle of the vehicle body 1 and, for example, supplies the estimated roll angle to the navigation system 12 and the headlight driver 15.

In the present embodiment, the sensor group 5, the rear-wheel speed sensor 7, and the ECU 20 constitute or form a roll angle estimation device 10.

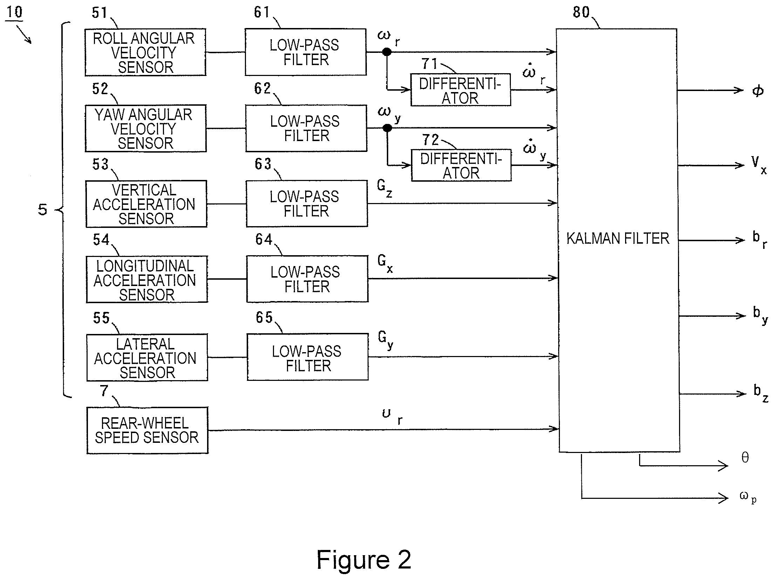

Figure 2 is a block diagram showing the construction of the roll angle estimation device 10 according to an embodiment of the present invention.

The roll angle estimation device 10 shown in Figure 2 is composed of or includes the sensor group 5, the rear-wheel speed sensor 7, low-pass filters 61 to 65, differentiators 71 and 72, and a Kalman filter 80. The function of the filter 80 is realized or provided by the ECU 20 shown in Figure 1 and also a computer program.

The sensor group 5 includes: a roll angular velocity sensor 51, a yaw angular velocity sensor 52, an vertical acceleration sensor 53, a longitudinal acceleration sensor 54, and a lateral acceleration sensor 55.

The roll angular velocity sensor 51 is provided on the vehicle body 1 to detect roll angular velocity of the vehicle body 1. Roll angular velocity is an angular velocity around or about the longitudinal axis of the vehicle 100. The yaw angular velocity sensor 52 is provided on the vehicle body 1 to detect yaw angular velocity of the vehicle body 1. Yaw angular velocity is an angular velocity around or about the vertical axis of the vehicle 100.

The vertical acceleration sensor 53 is provided on the vehicle body 1 to detect vertical acceleration of the vehicle body 1. Vertical acceleration is an acceleration along the vertical (i.e., upper-lower) direction of the vehicle body 1. The longitudinal acceleration sensor 54 is provided on the vehicle body 1 to detect longitudinal acceleration of the vehicle body 1. Longitudinal acceleration is an acceleration along the longitudinal (i.e., front-rear) direction of the vehicle body 1. The lateral acceleration sensor 55 is provided on the vehicle body 1 to detect lateral acceleration of the vehicle body 1. Lateral acceleration is an acceleration along the lateral (i.e. right-left) direction of the vehicle body 1. Although the vertical acceleration sensor 53, the longitudinal acceleration sensor 54, and the lateral acceleration sensor 55 may detect accelerations along mutually orthogonal directions, this is not essential. It suffices that these sensors are able to detect accelerations along respective three mutually different directions.

Via the low-pass filter 61, the output signal of the roll angular velocity sensor 51 is supplied as a roll angular velocity to the Kalman filter 80 and the differentiator 71. The low-pass filter 61 removes noise from the output signal of the roll angular velocity sensor 51. The differentiator 71 supplies a differential of the roll angular velocity as a roll angular acceleration to the Kalman filter 80. Via the low-pass filter 62, the output signal of the yaw angular velocity sensor 52 is supplied as a yaw angular velocity to the Kalman filter 80 and the differentiator 72. The low-pass filter 62 removes noise from the output signal of the yaw angular velocity sensor 52. The differentiator 72 supplies a differential of the yaw angular velocity as a yaw angular acceleration to the Kalman filter 80.

Via the low-pass filter 63, the output signal of the vertical acceleration sensor 53 is supplied as a vertical acceleration to the Kalman filter 80. Via the low-pass filter 64, the output signal of the longitudinal acceleration sensor 54 is supplied as a longitudinal acceleration to the Kalman filter 80. Via the low-pass filter 65, the output signal of the lateral acceleration sensor 55 is supplied as a lateral acceleration to the Kalman filter 80.

The frequency characteristics of the respective low-pass filters 61 to 65 are set according to the output characteristics of the corresponding sensors 51 to 55. More specifically, the frequency characteristics of the noise signals contained in the output signals of the sensors 51 to 55 can be previously specified at the design phase. The low-pass filters 61 to 65 may be designed so as to cut off such noise signals while passing necessary detection signals from the sensors 51 to 55.

The output signal of the rear-wheel speed sensor 7 is supplied as a rear-wheel speed to the Kalman filter 80. The rear-wheel speed is the rotational speed of the outermost periphery of the tire under the assumption that no skidding occurs between the road surface and the tire of the rear wheel 3. The rear-wheel speed is in use calculated from the output signal of the rear-wheel speed sensor 7 and the tire size. To simplify the explanation, it is assumed in Figure 2 that a signal indicating the rear-wheel speed is output from the rear-wheel speed sensor 7.

The roll angular velocity, roll angular acceleration, yaw angular velocity, yaw angular acceleration, vertical acceleration, longitudinal acceleration, lateral acceleration, and rear-wheel speed are represented by symbols in the following table. Note that the single dot above the symbol representing any of these parameters indicates a first-order differentiation.

**Table 1**

| parameter | definition |
| --- | --- |
| $\omega_r$ | roll angular velocity |
| $\dot{\omega}_r$ | roll angular acceleration |
| $\omega_y$ | yaw angular velocity |
| $\dot{\omega}_y$ | yaw angular acceleration |
| $G_z$ | vertical acceleration |
| $G_x$ | longitudinal acceleration |
| $G_y$ | lateral acceleration |
| $v_r$ | rear-wheel speed |

Based on the above parameters, the Kalman filter 80 estimates and outputs a roll angle, a vehicle speed, a roll angular velocity sensor offset, a yaw angular velocity sensor offset, an vertical acceleration sensor offset, a pitch angle, and a pitch angular velocity.

Herein, the vertical plane that is parallel to the direction of travel of the vehicle 100 will be referred to as the longitudinal vertical plane, whereas the vertical plane that is perpendicular to the longitudinal vertical plane will be referred to as the lateral vertical plane. The roll angle is an angle of inclination of the vehicle body 1 with respect to the direction of gravity in the lateral vertical plane. Vehicle speed is the velocity of the vehicle body 1 along the direction of travel.

The roll angular velocity sensor offset is an offset error of the roll angular velocity sensor 51; the yaw angular velocity sensor offset is an offset error of the yaw angular velocity sensor 52; and the vertical acceleration sensor offset is an offset error of the vertical acceleration sensor 53.

The vehicle speed, roll angular velocity sensor offset, yaw angular velocity sensor offset, vertical acceleration sensor offset, pitch angle, and pitch angular velocity will be represented by symbols in the following table.

**Table 2**

| parameter | definition |
|---|---|
| $\phi$ | roll angle |
| $V_x$ | vehicle speed |
| $b_r$ | roll angular velocity sensor offset |
| $b_y$ | yaw angular velocity sensor offset |
| $b_z$ | vertical acceleration sensor offset |
| $\theta$ | pitch angle |
| $\omega_p$ | pitch angular velocity |

In the roll angle estimation device 10 of the present embodiment, the roll angular velocity sensor 51, the yaw angular velocity sensor 52, the vertical acceleration sensor 53, the longitudinal acceleration sensor 54, the lateral acceleration sensor 55, and the rear-wheel speed sensor 7 are used to derive seven relational expressions in eqs. (16), (17), and (19), which are shown below. By using these relational expressions, the four parameters of the roll angle $\phi$, vehicle speed $V_x$, pitch angle $\theta$, and pitch angular velocity $\omega_p$ are estimated. In other words, there is a redundancy between the number of relational expressions and the number of estimated outputs; that is, there are more relational expressions than estimated outputs. This redundancy enables estimation of the roll angular velocity sensor offset $b_r$, yaw angular velocity sensor offset $b_y$, and vertical acceleration sensor offset $b_z$.

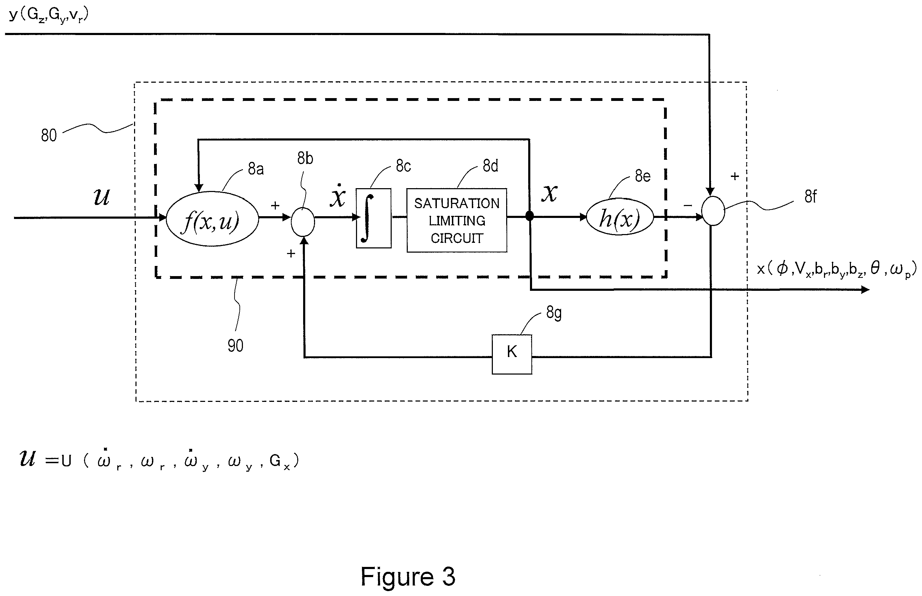

Figure 3 is a diagram showing the concept of the Kalman filter 80. In the Kalman filter 80 shown in Figure 3, a kinematic model 90 for the vehicle 100, as described below, is used.

In Figure 3, the Kalman filter 80 includes a system equation 8a, an adder 8b, an integrator 8c, a saturation limiting circuit 8d, an observation equation 8e, a subtracter 8f, and a Kalman gain 8g. The system equation 8a includes the mathematical function f(x,u); the observation equation 8e includes the mathematical function h(x); and the Kalman gain 8g includes septic Kalman gains K.

As mentioned earlier, the Kalman filter 80 is realized or provided by the ECU 20 shown in Figure 1 and also a computer program. More specifically, arithmetic operations of substituting respective input values to the system equation 8a and the observation equation 8e, as well as the addition calculation by the adder 8b, the integration calculation by the integrator 8c, the subsequently-described saturation limiting process by the saturation limiting circuit 8d, the subtraction calculation by the subtracter 8f, and the multiplication calculation by the Kalman gain 8g are realized or performed by the ECU 20 shown in Figure 1 by executing a computer program that is provided in advance. However, some or all of the system equation 8a, adder 8b, integrator 8c, saturation limiting circuit 8d, observation equation 8e, subtracter 8f, and Kalman gain 8g may be implemented as an independent piece(s) of hardware. For example, a circuit (state-estimation-amount saturation limiting circuit) functioning as the saturation limiting circuit 8d may be mounted.

In a current or present estimation operation, a detected value of the roll angular velocity $\omega_r$, a detected value of the roll angular acceleration (e.g. a differential of the roll angular velocity $\omega_r$), a detected value of the yaw angular velocity $\omega_y$, yaw angular acceleration (e.g. a differential of the yaw angular velocity $\omega_y$), and a detected value of the longitudinal acceleration $G_x$ are supplied as input parameters u of the system equation 8a. Moreover, as input parameters x for the system equation 8a, an estimated value of the roll angle $\phi$, an estimated value of the vehicle speed $V_x$, an estimated value of the roll angular velocity sensor offset $b_r$, an estimated value of the yaw angular velocity sensor offset $b_y$, an estimated value of the vertical acceleration sensor offset $b_z$, an estimated value of the pitch angle $\theta$, and an estimated value of the pitch angular velocity $\omega_p$ obtained from the previous estimation operation are supplied. The outputs of the system equation 8a are a predicted differential of the roll angle $\phi$, a predicted differential of the vehicle speed $V_x$, a predicted differential of the roll angular velocity sensor offset $b_r$, a predicted differential of the yaw angular velocity sensor offset $b_y$, a predicted differential of the vertical acceleration sensor offset $b_z$, a predicted differential of the pitch angle $\theta$, and a predicted differential of the pitch angular velocity $\omega_p$.

Products of an output of the subtracter 8f and the septic Kalman gains K obtained from the previous estimation operation are added to the predicted differential of the roll angle $\phi$, predicted differential of the vehicle speed $V_x$, predicted differential of the roll angular velocity sensor offset $b_r$, predicted differential of the yaw angular velocity sensor offset $b_y$, predicted differential of the vertical acceleration sensor offset $b_z$, predicted differential of the pitch angle $\theta$, and predicted

differential of the pitch angular velocity $\omega_p$. As a result, an estimated differential of the roll angle $\phi$, an estimated differential of the vehicle speed Vx, an estimated differential of the roll angular velocity sensor offset $b_r$, an estimated differential of the yaw angular velocity sensor offset $b_y$, as well as an estimated differential of the vertical acceleration sensor offset $b_z$, an estimated differential of the pitch angle $\theta$, and an estimated differential of pitch angular velocity $\omega_p$ are obtained.

The integrator 8c integrates the estimated differential of the roll angle $\phi$, estimated differential of the vehicle speed $V_x$, estimated differential of the roll angular velocity sensor offset $b_r$, estimated differential of the yaw angular velocity sensor offset $b_y$, estimated differential of the vertical acceleration sensor offset $b_z$, estimated differential of the pitch angle $\theta$, and estimated differential of the pitch angular velocity $\omega_p$, in which the Kalman gain K is taken into account, thereby obtaining the following values in the current or present estimation operation: an estimated value of the roll angle $\phi$, an estimated value of the vehicle speed $V_x$, an estimated value of the roll angular velocity sensor offset $b_r$, an estimated value of the yaw angular velocity sensor offset $b_y$, an estimated value of the vertical acceleration sensor offset $b_z$, an estimated value of the pitch angle $\theta$, and an estimated value of the pitch angular velocity $\omega_p$.

For example, the saturation limiting circuit 8d sets saturation characteristics for all of: the estimated value of the roll angular velocity sensor offset $b_r$, the estimated value of the yaw angular velocity sensor offset $b_y$, and the estimated value of the vertical acceleration sensor offset $b_z$. For example, if the estimated value of the roll angular velocity sensor offset $b_r$ is greater than the upper limit value, the saturation limiting circuit 8d corrects the value to an upper limit value, and if it is smaller than the lower limit value, the saturation limiting circuit 8d corrects the value to a lower limit value. The same also applies to the estimated value of the yaw angular velocity sensor offset $b_y$ and the estimated value of the vertical acceleration sensor offset $b_z$.

As will be understood from the above explanation, it may be said that the saturation limiting circuit 8d limits saturation of the estimated values. This means limiting the learning or estimation range of sensor offset errors. Such limitation prevents deviation of learned or estimated values into a range of errors, which actually will not occur.

Note that the aforementioned three estimated values may not be all of the estimated values that the saturation limiting circuit 8d sets saturation characteristics for. Saturation characteristics may be set for the seven estimated values, which are to be integrated by the integrator 8c. This may prevent substantial deviation in the learned values with respect to all estimated values.

As input parameters x for the observation equation 8e, an estimated value of the roll angle $\phi$, an estimated value of the vehicle speed $V_x$, an estimated value of the roll angular velocity sensor offset $b_r$, an estimated value of the yaw angular velocity sensor offset $b_y$, an estimated value of the vertical acceleration sensor offset $b_z$, an estimated value of the pitch angle $\theta$, and an estimated value of the pitch angular velocity $\omega_p$ are supplied. From the observation equation 8e, a calculated value of the vertical acceleration $G_z$, a calculated value of the lateral acceleration $G_y$, and a calculated value of the rear-wheel speed $v_r$ are obtained.

By deriving the system equation 8a and the observation equation 8e under the kinematic model 90, relational expressions between input parameters u and y and output parameters x can be derived.

In the present embodiment, the following assumptions are made in order to simplify the kinematic model 90:

(a) there is no skidding in the direction of rotation between the rear wheel 3 and the road surface; and
(b) the lateral skid velocity of the rear wheel 3 is 0.

Based on these assumptions (a) and (b), the equations of the kinematic model 90 are derived as follows.

The roll angle, differential of the roll angle, pitch angle, differential of the pitch angle, yaw angle, differential of the yaw angle, roll angular velocity, yaw angular velocity, and pitch angular velocity are represented by symbols in the following table.

**Table 3**

| parameter | definition |
|---|---|
| $\phi$ | roll angle |
| $\dot{\phi}$ | differential of roll angle |
| $\theta$ | pitch angle |
| $\dot{\theta}$ | differential of pitch angle |
| $\psi$ | yaw angle |
| $\dot{\psi}$ | differential of yaw angle |
| $\omega_r$ | roll angular velocity |

(continued)

| parameter | definition |
|---|---|
| $\omega_y$ | yaw angular velocity |
| $\omega_p$ | pitch angular velocity |

First, from a general relational expression between Euler angles and angular velocity, the following equation holds true.

**Equation 1**

$$\begin{bmatrix} \dot{\phi} \\ \dot{\theta} \\ \dot{\psi} \end{bmatrix} = \begin{bmatrix} 1 & \tan\theta\sin\phi & \tan\theta\cos\phi \\ 0 & \cos\phi & -\sin\phi \\ 0 & \sin\phi\sec\theta & \cos\phi\sec\theta \end{bmatrix} \begin{bmatrix} \omega_r \\ \omega_p \\ \omega_y \end{bmatrix} \quad \cdots (1)$$

From Equation 1, a roll angle differential is derived as shown in the following equation.

**Equation 2**

$$\dot{\phi} = \omega_r + \dot{\theta}\tan\phi\tan\theta + \omega_y\sec\phi\tan\theta \cdots (2)$$

Figure 4 is a diagram describing a position at which the sensor group 5 is attached. In Figure 4, Figure 4(a) shows the left side of the vehicle 100, and Figure 4(b) shows the front of the vehicle 100. Figure 5 is a vectorial representation of the attachment position of the sensor group 5.

In Figures 4(a) and (b), the attachment position of the sensor group 5 is denoted as PS. There is a horizontal distance L taken or measured from the attachment position PS to the center of the rear wheel 3, and a height h taken or measured from the road surface to the attachment position PS.

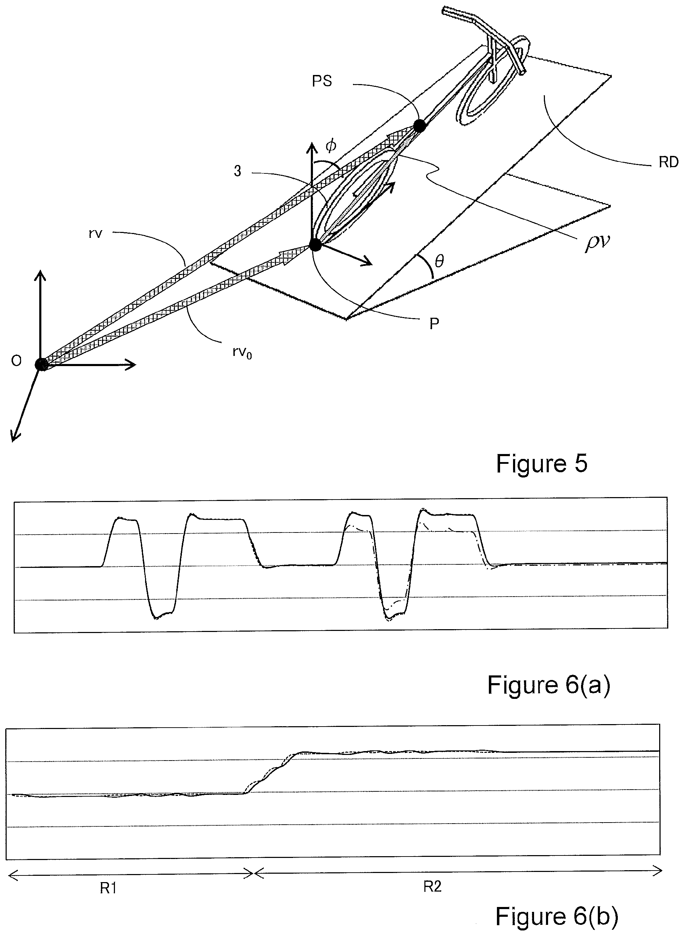

In Figure 5, the rear wheel 3 is inclined by the roll angle $\phi$ relative to the road surface RD, which is inclined relative to the inertia coordinate system origin O by the pitch angle $\theta$. Figure 5 defines a position vector rv of the attachment position PS of the sensor group 5 relative to the origin O of the inertia coordinate system, a position vector $rv_0$ of a tangential point P relative to the origin O of the inertia coordinate system, and a vector $\rho v$ extending from the tangential point P to the attachment position PS of the sensor group 5. In this case, $rv=rv_0+\rho v$ holds true.

A second-order differentiation vector of the position vector rv, a second-order differentiation vector of the position vector $rv_0$, a second-order differentiation vector of the vector $\rho v$, and a gravitational acceleration vector are represented by symbols in the following table. Note that the double dots above the symbol represent any parameters indicate a second-order differentiation.

**Table 4**

| parameter | definition |
|---|---|
| $\ddot{rv}$ | second-order differentiation vector of position vector rv |
| $\ddot{rv}_0$ | second-order differentiation vector of position vector $rv_0$ |
| $\ddot{\rho v}$ | second-order differentiation vector of attachment position vector $\rho v$ |
| gv | gravitational acceleration vector |

Assume that an acceleration vector Gv of the attachment position PS is detected by the vertical acceleration sensor 53, longitudinal acceleration sensor 54, and lateral acceleration sensor 55. The acceleration vector Gv is obtained by adding the gravitational acceleration vector gv to the second-order differentiation vector of the position vector rv, as indicated by the following equation.

**Equation 3**

$$Gv = \ddot{r}v + gv = \ddot{r}v_0 + \ddot{\rho}v + gv \qquad \cdots (3)$$

The right-hand side of Equation 3 shown above will now be calculated. The vector $\rho v$ in Figure **5** is expressed by the following equation.
**Equation 4**

$$\rho v = [e_3]\rho \qquad \cdots (4)$$

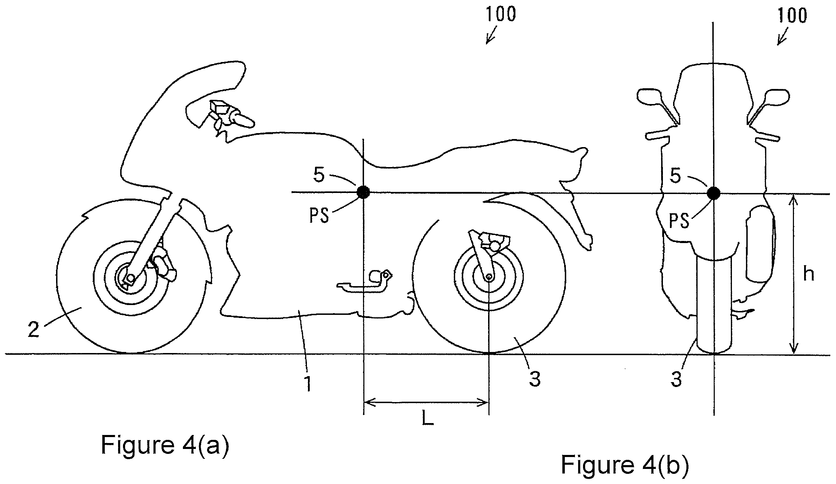

In Equation 4 shown above, $[e_3]=[e_{31},e_{32},e_{33}]$, where $e_{31}$, $e_{32}$, and $e_{33}$ are base vectors which are fixed on the vehicle body 1. The vector $e_{31}$ is a base vector of the vehicle body 1 along the forward direction; the vector $e_{32}$ is a base vector of the vehicle body 1 along the left direction; and the vector $e_{33}$ is a base vector of the vehicle body 1 along the vertically upward direction. $\rho$ is a matrix. From Figure 4 it can be seen that the matrix $\rho$ in Equation 4 above is expressed by the following equation.
**Equation 5**

$$\rho = \begin{bmatrix} L \\ 0 \\ h \end{bmatrix} \qquad \cdots (5)$$

From Equation 5 shown above, a second-order differentiation vector of the vector $\rho v$ is obtained as shown in the following equation.
**Equation 6**

$$\ddot{\rho}v = [e]\begin{bmatrix} a_x\left(\omega_r,\omega_y,\dot{\omega}_r,\dot{\omega}_y,\phi,\theta,\dot{\theta},L,h\right) \\ a_y\left(\omega_r,\omega_y,\dot{\omega}_r,\dot{\omega}_y,\phi,\theta,\dot{\theta},L,h\right) \\ a_z\left(\omega_r,\omega_y,\dot{\omega}_r,\dot{\omega}_y,\phi,\theta,\dot{\theta},L,h\right) \end{bmatrix} \qquad \cdots (6)$$

In Equation 6 shown above, $a_x$, $a_y$, and $a_z$ are mathematical functions. The mathematical functions $a_x$, $a_y$, and $a_z$ can be determined from the calculation of eqs. (4) and (5). By eliminating a differential of the roll angle $\phi$ and a differential of the yaw angle $\psi$ from Equation 5 shown above, Equation 6 shown above is obtained.

Next, the lateral skidding velocity of the vehicle 100 is denoted as $V_y$. A first-order differentiation vector of the position vector $rv_0$ shown in Figure 5 is expressed by the following equation, using the vehicle speed $V_x$ and the lateral skidding velocity $V_y$.
**Equation 7**

$$\dot{r}v_0 = [e_2]\begin{bmatrix} V_x \\ V_y \\ 0 \end{bmatrix} \qquad \cdots (7)$$

In Equation 7 shown above, [e2]=[e2$_1$,e2$_2$,e2$_3$], where elements e2$_1$, e2$_2$, and e2$_3$ are base vectors, which are obtained by rotating the base vector [e0]=[θ$_1$,θ$_2$,θ$_3$] of the inertia coordinate system by $\psi$ along the yaw direction and by θ along the pitch direction.

From assumption (b), Vy=0. When Equation 7 shown above is subjected to a first-order differentiation, a second-order differentiation vector of the position vector rv$_0$ is expressed by the following equation.

**Equation 8**

$$\ddot{r}v_0 = \begin{bmatrix} e_3 \end{bmatrix} \begin{bmatrix} 1 & & \\ & \cos\phi & \sin\phi \\ & -\sin\phi & \cos\phi \end{bmatrix} \begin{bmatrix} \dot{V}_x \\ \cos\theta\left(w_p \sin\phi \sec\theta + w_y \cos\phi \sec\theta\right)V_x \\ \left(-w_p \cos\phi + w_y \sin\phi\right)V_x \end{bmatrix}$$

$$\cdots (8)$$

Lastly, the gravitational acceleration vector is expressed by the following equation.

**Equation 9**

$$gv = \begin{bmatrix} e_3 \end{bmatrix} \begin{bmatrix} 1 & & \\ & \cos\phi & \sin\phi \\ & -\sin\phi & \cos\phi \end{bmatrix} \begin{bmatrix} \cos\theta & & -\sin\theta \\ & 1 & \\ \sin\theta & & \cos\theta \end{bmatrix} \begin{bmatrix} \cos\psi & \sin\psi & \\ -\sin\psi & \cos\psi & \\ & & 1 \end{bmatrix} \begin{bmatrix} 0 \\ 0 \\ g \end{bmatrix}$$

$$\cdots (9)$$

In Equation 9 shown above, g represents the magnitude of gravitational acceleration.

From Equations 3, 6, 8, and 9 shown above, the acceleration vector Gv detected at the attachment position **PS** is expressed by the following equation.

**Equation 10**

$$Gv = \ddot{r}v + gv = \ddot{r}v_0 + \ddot{\rho}v + gv =$$

$$\begin{bmatrix} e_3 \end{bmatrix} \begin{bmatrix} a_x\left(\omega_r, \omega_y, \dot{\omega}_r, \dot{\omega}_y, \phi, \theta, \dot{\theta}, L, h, \dot{V}_x, g\right) \\ a_y\left(\omega_r, \omega_y, \dot{\omega}_r, \dot{\omega}_y, \phi, \theta, \dot{\theta}, L, h, V_x, g\right) \\ a_z\left(\omega_r, \omega_y, \dot{\omega}_r, \dot{\omega}_y, \phi, \theta, \dot{\theta}, L, h, V_x, g\right) \end{bmatrix} \quad \cdots (10)$$

Now, the acceleration vector Gv detected at the attachment position PS is expressed by the following equation, using the longitudinal acceleration G$_x$ detected by the longitudinal acceleration sensor 54, the lateral acceleration G$_y$ detected by the lateral acceleration sensor 55, and the vertical acceleration G$_z$ detected by the vertical acceleration sensor 53.

$$Gv=[e][G_x,G_y,G_z]$$

Therefore, from Equation 10 shown above, the longitudinal acceleration G$_x$ detected by the longitudinal acceleration sensor 54, the lateral acceleration G$_y$ detected by the lateral acceleration sensor 55, and the vertical acceleration G$_z$ detected by the vertical acceleration sensor 53 are expressed by the following equation.

**Equation 11**

$$\begin{bmatrix} G_x \\ G_y \\ G_z \end{bmatrix} = \begin{bmatrix} a_x\left(\omega_r,\omega_y,\dot{\omega}_r,\dot{\omega}_y,\phi,\theta,\dot{\theta},L,h,\dot{V}_x,g\right) \\ a_y\left(\omega_r,\omega_y,\dot{\omega}_r,\dot{\omega}_y,\phi,\theta,\dot{\theta},L,h,V_x,g\right) \\ a_z\left(\omega_r,\omega_y,\dot{\omega}_r,\dot{\omega}_y,\phi,\theta,\dot{\theta},L,h,V_x,g\right) \end{bmatrix} \quad \cdots (11)$$

Next, the relationship between the rear-wheel speed $v_r$ and the vehicle speed $V_x$ is determined. From assumption (a) described above, there is no skidding occurring between the rear wheel 3 and the road surface, and thus the relationship between the rear-wheel speed $v_r$ and the vehicle speed $V_x$ expressed by the following equation holds true.

**Equation 12**

$$\frac{V_x}{R_e - R_{cr}\,(1-\cos\phi)} = \frac{\upsilon_r}{R_e} \quad \cdots (12)$$

Equation 12 shown above gives the following equation.

**Equation 13**

$$\upsilon_r = \frac{R_e}{R_e - R_{cr}\,(1-\cos\phi)} V_x = \frac{1}{1 - R_{cr}/R_e\,(1-\cos\phi)} V_x \quad \cdots (13)$$

Equations 2, 11, and 13 shown above give the following equation.

**Equation 14**

$$\frac{d}{dr}\begin{bmatrix} \phi \\ V_x \end{bmatrix} = \begin{bmatrix} \dot{\phi}\left(\omega_r,\omega_y,\phi,\theta,\dot{\theta}\right) \\ G_x - a_x\left(\omega_r,\omega_y,\dot{\omega}_r,\dot{\omega}_y,\phi,\theta,\dot{\theta},L,h,g\right) \end{bmatrix} \quad \cdots (14)$$

**Equation 15**

$$\begin{bmatrix} G_y \\ G_z \\ \upsilon_r \end{bmatrix} = \begin{bmatrix} a_y\left(\omega_r,\omega_y,\dot{\omega}_r,\dot{\omega}_y,\phi,\theta,\dot{\theta},L,h,V_x,g\right) \\ a_z\left(\omega_r,\omega_y,\dot{\omega}_r,\dot{\omega}_y,\phi,\theta,\dot{\theta},L,h,V_x,g\right) \\ \dfrac{1}{1 - R_{cr}/R_e\left(1-\cos\phi\right)} V \end{bmatrix} \quad \cdots (15)$$

The use of Equation 14 shown above as the system equation, and Equation 15 above as the observation equation enables application of an extended Kalman filter.

Furthermore, even when changes occur in the roll angular velocity sensor offset $b_r$, the yaw angular velocity sensor offset $b_y$, and the vertical acceleration sensor offset $b_z$, the changes in these values are slower than the motion of the vehicle 100. Therefore, the differential of the roll angular velocity sensor offset $b_r$, the differential of the yaw angular velocity sensor offset $b_y$, and the differential of the vertical acceleration sensor offset $b_z$ can be regarded as zero.

Moreover, by replacing the roll angular velocity $\omega_r$, yaw angular velocity $\omega_y$, and vertical acceleration $G_z$ in Equations 14 and 15 above with $\omega_r - b_r$, $\omega_y - b_y$, and $G_z - b_z$, respectively, the following equation is derived.

**Equation 16**

$$\frac{d}{dt}\begin{bmatrix} \phi \\ V_x \\ b_r \\ b_y \\ b_z \end{bmatrix} = \begin{bmatrix} \dot{\phi}\left(\omega_r - b_r, \omega_y - b_y, \phi, \theta, \dot{\theta}\right) \\ G_x - a_x\left(\omega_r - b_r, \omega_y - b_y, \dot{\omega}_r, \dot{\omega}_y, \phi, \theta, \dot{\theta}, L, h, g\right) \\ 0 \\ 0 \\ 0 \end{bmatrix} \quad \cdots (16)$$

**Equation 17**

$$\begin{bmatrix} G_y \\ G_z \\ \upsilon_r \end{bmatrix} = \begin{bmatrix} a_y\left(\omega_r - b_r, \omega_y - b_y, \dot{\omega}_r, \dot{\omega}_y, \phi, \theta, \dot{\theta}, L, h, V_x, g\right) \\ a_z\left(\omega_r - b_r, \omega_y - b_y, \dot{\omega}_r, \dot{\omega}_y, \phi, \theta, \dot{\theta}, L, h, V_x, g\right) \\ \dfrac{1}{1 - R_{cr}/R_e\left(1 - \cos\phi\right)}V_x \end{bmatrix} \quad \cdots (17)$$

Equations 16 and 17 above take into account the roll angular velocity sensor offset $b_r$, the yaw angular velocity sensor offset $b_y$, and the vertical acceleration sensor offset $b_z$.

Moreover, when the pitch angular velocity $\omega_p$ varies in accordance with a coefficient $\tau$, the pitch angle $\theta$ and pitch angular velocity $\omega_p$ can be expressed by Equation 18. The coefficient $\tau$ is adjusted by the amount of change in the pitch angular velocity occurring in the vehicle body 100.

**Equation 18**

$$\frac{d}{dt}\begin{bmatrix} \theta \\ \omega_p \end{bmatrix} = \begin{bmatrix} \omega_p \\ -\alpha\omega_p \end{bmatrix} \quad \cdots (18)$$

Note that parameter $\alpha$ represents an exponential decay factor. Parameter $\omega_p$ is a mathematical function of time $t$. The aforementioned coefficient $\tau$ is included in the exponential decay factor as a time constant. In other words, $\alpha = 1/\tau$. Furthermore, from Equation 16 and Equation 18, Equation 19 shown below is derived

Equation 19

$$\frac{d}{dt}\begin{bmatrix} \phi \\ V_x \\ b_r \\ b_y \\ b_z \\ \theta \\ \omega_p \end{bmatrix} = \begin{bmatrix} \dot{\phi}\left(\omega_r - b_r, \omega_y - b_y, \phi, \theta, \dot{\theta}\right) \\ G_x - a_x\left(\omega_r - b_r, \omega_y - b_y, \dot{\omega}_r, \dot{\omega}_y, \phi, \theta, \dot{\theta}, L, h, g\right) \\ 0 \\ 0 \\ 0 \\ \omega_p \\ -1/\tau\,\omega_p \end{bmatrix}$$

$$\cdots (19)$$

By applying an extended Kalman filter with Equation 17 shown above as the observation equation and Equation 19 above as the system equation, the roll angle $\phi$, vehicle speed $V_x$, roll angular velocity sensor offset $b_r$, yaw angular velocity sensor offset $b_y$, vertical acceleration sensor offset $b_z$, pitch angle $\theta$, and pitch angular velocity $\omega_p$ can be estimated.

Herein, the right-hand side of Equation 19 shown above corresponds to the mathematical function f(x,u) shown in Figure 3, whereas the right-hand side of Equation 17 shown above corresponds to the mathematical function h(x) shown in Figure 3.

An angular velocity sensor is more susceptible to offset errors than an acceleration sensor. Therefore, in the present embodiment, an offset error of the roll angular velocity sensor 51 (e.g. a roll angular velocity sensor offset $b_r$) and an offset error of the yaw angular velocity sensor 52 (e.g. a yaw angular velocity sensor offset $b_y$) are estimated. By using the roll angular velocity sensor offset $b_r$ and the estimated value of the yaw angular velocity sensor offset $b_y$ in a next or subsequent estimation operation, the accuracy of estimation of the roll angle $\phi$ is sufficiently improved.

Moreover, if offset errors of three acceleration sensors (e.g. vertical acceleration sensor 53, longitudinal acceleration sensor 54, and lateral acceleration sensor 55) can be estimated, the accuracy of the estimation of the roll angle $\phi$ is expected to be further improved. However, observability cannot be maintained when offset errors of three acceleration sensors are to be estimated. Therefore, the present embodiment estimates an offset error of the vertical acceleration sensor 53 (e.g. a vertical acceleration sensor offset $b_z$), for the following reasons. In a range where the roll angle $\phi$ of the vehicle body 1 is small, the vertical acceleration of the vehicle body 1 hardly changes. When a detected value of such vertical acceleration is affected by the vertical acceleration sensor offset $b_z$, changes in the detected value of the vertical acceleration will exert a large influence on the estimation of the roll angle $\phi$. Therefore, the estimated value of the vertical acceleration sensor offset $b_z$ is used in a next or subsequent estimation operation, to thereby further improve the accuracy of the estimation of the roll angle $\phi$ in a range where the roll angle $\phi$ is small.

Figure 6(a) shows results of a comparison between the estimated value of the roll angle $\phi$ and the true roll angle value depending on whether estimation of the pitch angle $\theta$ is performed or not. In Figure 6(b), a solid line indicates results in the case where estimation of the pitch angle $\theta$ and the pitch angular velocity is performed; a dot-dash line indicates results in the case where estimation of the pitch angular velocity and the pitch angle is not performed; and a broken line indicates true values. The fact that the broken line is mostly hidden under the solid line indicates that the estimation results of the pitch angle $\theta$ and the pitch angular velocity well approximate their true values.

Figure 6(b) shows a result of a comparison between the estimated values of the pitch angle $\theta$ and true pitch angle values. In Figure 6(b), a solid line indicates estimated values, and a broken line indicates true values. In Figure 6(b), a period R1 indicates a period of traveling flat terrain, and a period R2 indicates a period of traveling sloped terrain.

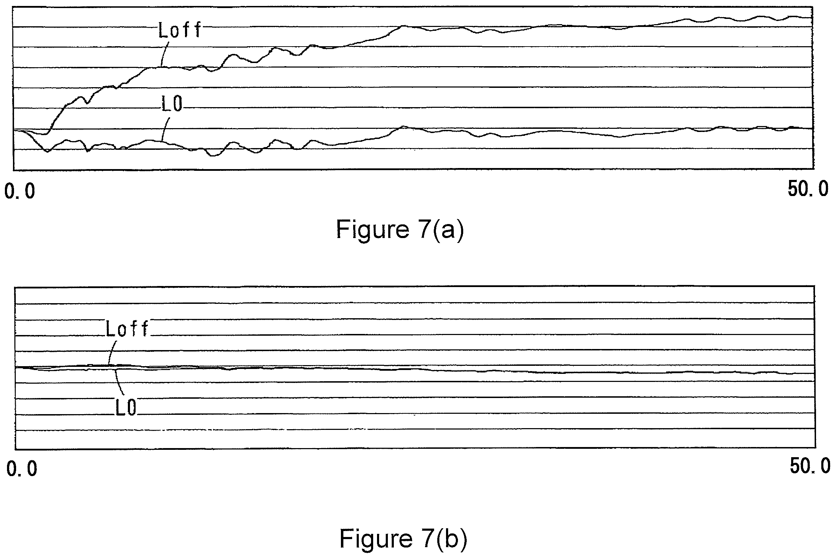

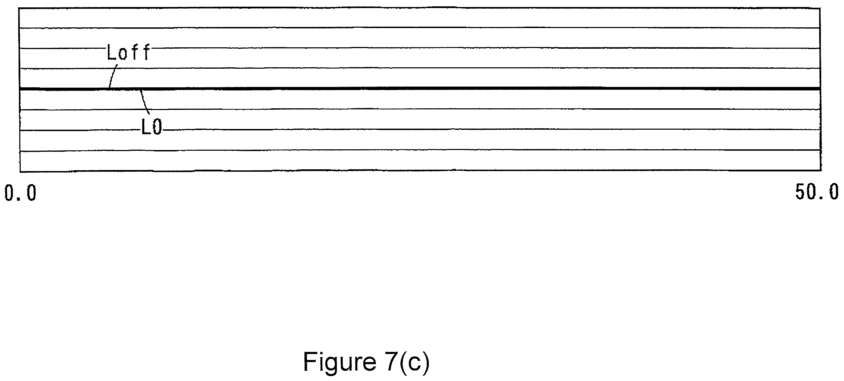

Figures 7(a), 7(b), and 7(c) are diagrams showing respective time transition of the estimated value of each parameter in the case where the roll angular velocity sensor 51 has an offset error and in the case where the roll angular velocity sensor 51 does not have any offset error.

Here, the roll angular velocity sensor 51, the yaw angular velocity sensor 52, the vertical acceleration sensor 53, the longitudinal acceleration sensor 54, the lateral acceleration sensor 55, and the rear-wheel speed sensor 7, each having no offset error, were attached to the vehicle 100, and the estimated values of the respective parameters were calculated based on detection values of the roll angular velocity sensor 51, the yaw angular velocity sensor 52, the vertical acceleration sensor 53, the longitudinal acceleration sensor 54, the lateral acceleration sensor 55, and the rear-wheel speed sensor 7 during actual travel. Moreover, an offset error of 3 degs/s was added to the detection value of the roll angular velocity sensor 51. Thus, the estimated values of the respective parameters were calculated.

As mentioned earlier, Figures 6(a) and 6(b) show the estimated values of the roll angle $\phi$ and the pitch angle $\theta$. Figure 7(a) shows the roll angular velocity sensor offset $b_r$; Figure 7(b) shows the yaw angular velocity sensor offset $b_y$; and Figure 7(c) shows the estimated value of the vertical acceleration sensor offset $b_z$.

In a comparison shown in Figure 6(a) between the results in the case where estimation of the pitch angle $\theta$ and the pitch angular velocity is performed (solid line) and the results in the case where estimation of the pitch angle and the pitch angular velocity is not performed (dot-dash line), it will be understood that the former better matches the true roll angle. It can be seen from Figure 6(b) that the estimated pitch angle $\theta$ is very close to the true pitch angle; that is, the pitch angle $\theta$ is accurately estimated. On sloped terrain, in particular, the estimated value of the roll angle $\phi$ during travel shown in Figure 6(a) is estimated closer to the true value. The fact that the three lines overlap on flat terrain indicates that a high accuracy is maintained regardless of whether the estimation of the roll angle $\phi$ is performed or not.

In Figures 7(a), 7(b), and 7(c), the symbol L0 represents the estimated value of each parameter in the case where no offset is added to the roll angular velocity sensor 51, and Loff represents the estimated value of each parameter in the case where an offset error is added to the detection value of the roll angular velocity sensor 51.

As indicated in Figures 7(a), 7(b), and 7(c), the difference between the estimated value of the roll angular velocity sensor offset $b_r$ in the case where an offset error is added to the detection value of the roll angular velocity sensor 51 and the estimated value of roll angular velocity sensor offset $b_r$ in the case where no offset error is added to the detection value of the roll angular velocity sensor 51 is equal to the value (3 degs/s) of the offset error.

Note that the estimated values of the yaw angular velocity sensor offset $b_y$ and the vertical acceleration sensor offset $b_z$ are both almost zero in the case where no offset error is added to the detection value of the roll angular velocity sensor 51 and in the case where an offset error is added to the detection value of the roll angular velocity sensor 51.

Thus, it will be seen that the roll angle estimation device 10 of the present embodiment is able to estimate the roll angle $\phi$ with high accuracy, even when the roll angular velocity sensor 51 has an offset error.

The roll angle estimation device 10 of the present embodiment estimates the roll angular velocity sensor offset $b_r$, yaw angular velocity sensor offset $b_y$, vertical acceleration sensor offset $b_z$, pitch angle $\theta$, and pitch angular velocity $\omega_p$, as well as the roll angle $\phi$ and the vehicle speed $V_x$, and uses the estimated values of the roll angular velocity sensor offset $b_r$, yaw angular velocity sensor offset $b_y$, vertical acceleration sensor offset $b_z$, pitch angle $\theta$, and pitch angular velocity $\omega_p$ in a next or subsequent estimation operation. This compensates for a decrease in the accuracy of the estimation of the roll angle $\phi$ by utilizing results of the estimation of the roll angular velocity sensor offset $b_r$, yaw angular velocity sensor offset $b_y$, and vertical acceleration sensor offset $b_z$, as well as the pitch angle $\theta$ and pitch angular velocity $\omega_p$. As a result, the roll angle $\phi$ can be estimated with high accuracy.

Moreover, estimated values of the offset errors of the roll angular velocity sensor 51 and the yaw angular velocity sensor 52, which are more susceptible to offsets than an acceleration sensor, are used for the next or subsequent estimation operation. This sufficiently improves the accuracy of the estimation of the roll angle $\phi$.

Furthermore, an estimated value of the offset error of the vertical acceleration sensor 53 is used in the next or subsequent estimation operation. This further improves the accuracy of the estimation of the roll angle $\phi$ in a range where the roll angle $\phi$ is small.

Moreover, a detected value of the rear-wheel speed $v_r$ as detected by the rear-wheel speed sensor 7 is used in the estimation operation. This makes it possible to estimate the roll angle $\phi$ of the vehicle body 1, the roll angular velocity sensor offset $b_r$, the yaw angular velocity sensor offset $b_y$, the vertical acceleration sensor offset $b_z$, and the vehicle speed $V_x$ with high accuracy, even when the vehicle 100 turns in a small radius and with a low velocity.

Thus, the roll angle estimation device 10 estimates the roll angle $\phi$ of the vehicle body 1 with a high or improved accuracy. As a result, the navigation system 12 and the headlight driver 15 operate accurately, on the basis of the roll angle $\phi$ estimated by the ECU 20.

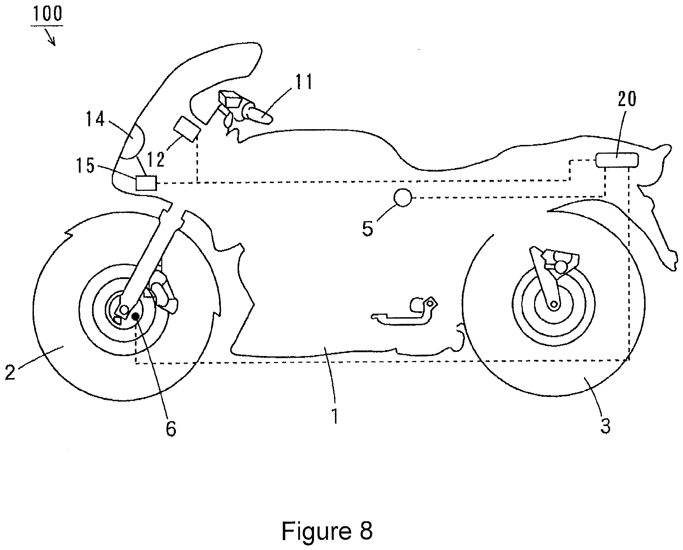

In the roll angle estimation device 10 according to the above-described embodiment, the rear-wheel speed sensor 7 for detecting the rotational speed of the rear wheel 3 is attached to the metal wheel of the rear wheel 3. Alternatively, instead of the rear-wheel speed sensor 7, a front-wheel speed sensor 6 for detecting the rotational speed of the front wheel 2 may be attached to the metal wheel of the front wheel 2, as shown in Figure 8. Figure 8 is a schematic diagram of a vehicle 100 including a roll angle estimation device according to another embodiment of the present invention. In other words, the above-described embodiment utilizes a rear-wheel speed $v_r$ which is detected by the rear-wheel speed sensor 7. Instead of using the rear-wheel speed $v_r$ detected by the rear-wheel speed sensor 7, a rear-wheel speed $v_r$ may be estimated from the front-wheel speed which is detected by the front-wheel speed sensor 6 shown in Figure 8.

When the vehicle 100 turns in a small radius and with a low velocity, the turning radius of the front wheel 2 becomes larger than the turning radius of the rear wheel 3. This makes the rotational speed of the front wheel 2 detected by the front-wheel speed sensor 6 higher than the rotational speed of the rear wheel 3. Accordingly, the ECU 20 estimates a rear-wheel speed $v_r$ from the rotational speed of the front wheel 2 which is detected by the front-wheel speed sensor 6.

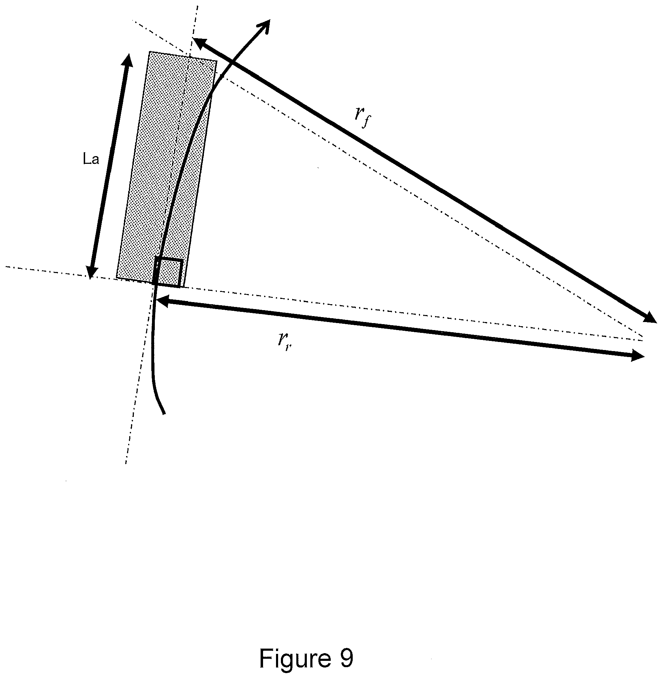

Figure 9 is a diagram illustrating the turning radii of the front wheel 2 and the rear wheel 3 while the vehicle 100 turns. From assumption (b) described above, the lateral skidding velocity of the rear wheel 3 is zero, and thus the relationship between the turning radius $r_f$ of the front wheel 2 and the turning radius $r_r$ of the rear wheel 3 of the following equation holds true 3.

**Equation 20**

$$r^2_f = r^2_r + La^2 \quad \cdots (20)$$

Herein, La is the wheelbase length of the vehicle 100. Equation 20 gives the following equation.

**Equation 21**

$$\frac{r_f}{r_r} = \sqrt{1 + \frac{La^2}{r_r^2}} \quad \cdots (21)$$

The ratio between the velocity $V_f$ of the front wheel 2 at its tangential point and the velocity $V_r$ of the rear wheel 3 at its tangential point are equal to the ratio between the turning radius $r_f$ of the front wheel 2 and the turning radius $r_r$ of the rear wheel 3. Thus, the following equation holds true.

**Equation 22**

$$\frac{V_f}{V_r} = \frac{r_f}{r_r} = \sqrt{1 + \frac{La^2}{r_r^2}} \quad \cdots (22)$$

Furthermore, assuming that the vehicle 100 is steadily turning, the turning radius $r_r$ of the rear wheel 3 is expressed by the following equation, using the velocity $V_r$ of the rear wheel 3 at its tangential point and the roll angle $\varphi$.

**Equation 23**

$$r_r = \frac{V_r^2}{g \tan \phi} \quad \cdots (23)$$

In Equation 23 shown above, g is the magnitude of gravitational acceleration. Substituting Equation 23 above into Equation 22 above gives the following equation.

**Equation 24**

$$V_r^4 - V_f^2 V_r^2 + La^2 g^2 \tan^2 \phi = 0 \quad \cdots (24)$$

From Equation 24 shown above, the velocity $V_r$ of the rear wheel 3 at its tangential point is expressed by the following equation.

**Equation 25**

$$V_r = \sqrt{\dfrac{V_f{}^2 + \sqrt{V_f{}^4 - 4La^2g^2\tan^2\phi}}{2}} \qquad \cdots (25)$$

Equation 25 shown above has a solution only when the condition of the following equation is satisfied.

**Equation 26**

$$V_f{}^4 - 4La^2g^2\tan^2\phi \geq 0 \qquad \cdots (26)$$

When the turning radius of the vehicle 100 is small, there may be cases where the condition of Equation 26 shown above is not satisfied. Equation 25 shown above is modified into the following equation, so that there will be a solution even in such cases.

**Equation 27**

$$\sqrt{\dfrac{V_f{}^2 + \sqrt{V_f{}^4 - 4La^2g^2\tan^2\phi}}{2}} \qquad (\text{when } V_f{}^4 \geq 4La^2g^2\tan^2\phi)$$

$$\dfrac{V_f}{\sqrt{2}} \qquad (\text{when } V_f{}^4 < 4La^2g^2\tan^2\phi)$$

$$\cdots (27)$$

The estimated value of the roll angle $\phi$ from the previous estimation operation is used as the roll angle $\phi$ in Equation 27 shown above.

From Equation 27 shown above, the relationship between the velocity $V_f$ of the front wheel 2 at its tangential point and the velocity $V_r$ of the rear wheel 3 at its tangential point is determined. Therefore, the rear-wheel speed $V_r$ can be calculated from the rotational speed of the front wheel 2 detected by the front-wheel speed sensor 6 (hereinafter referred to as the front-wheel speed $V_f$).

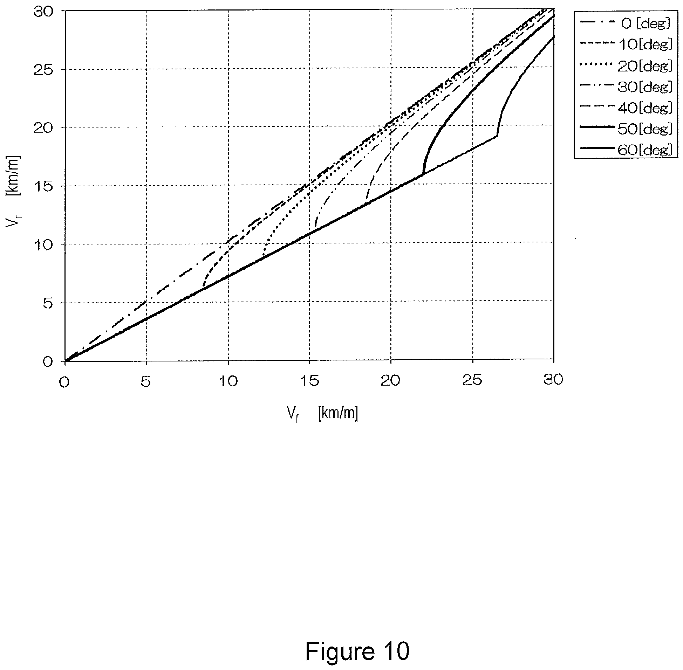

Figure 10 is a diagram showing the results of calculating the relationship between the front-wheel speed $V_f$ and the rear-wheel speed $V_r$. In Figure 10, the vertical axis represents the rear-wheel speed $V_r$, and the horizontal axis represents the front-wheel speed $V_f$.

As shown in Figure 10, the rear-wheel speed $V_r$ can be estimated from the front-wheel speed $V_f$, which is detected by the front-wheel speed sensor 6. Therefore, even when only the front-wheel speed sensor 6 is provided, it is possible to estimate the roll angle $\phi$ of the vehicle body 1, the vehicle speed $V_x$, the roll angular velocity sensor offset $b_r$, the yaw angular velocity sensor offset $b_y$, and the vertical acceleration sensor offset $b_z$ with a high or improved accuracy, similarly to the case where the rear-wheel speed sensor 7 is provided.

Instead of the roll angular velocity sensor 51 and yaw angular velocity sensor 52 in the above-described embodiment, two or more angular velocity sensors may be used, which detect angular velocity around two or more axes other than the longitudinal direction and the vertical direction of the vehicle 100. In this case, the detection values detected, measured or determined by the two or more angular velocity sensors may be converted into a roll angular velocity $\omega_r$ and a yaw angular velocity $\omega_y$ by a geometric technique, so that Equations 16 and 17 above can be used.

In addition to the roll angular velocity sensor 51 and yaw angular velocity sensor 52 of the above-described embodiment, an angular velocity sensor, which detects angular velocity around an axis in the lateral direction of the vehicle 100 may be used. In this case, the accuracy of estimation of the roll angle $\phi$ may be further improved.

Instead of the vertical acceleration sensor 53, the longitudinal acceleration sensor 54, and the lateral acceleration sensor 55 in the above-described embodiment, three or more acceleration sensors may be used, which detect acceleration along three or more directions other than the vertical direction, the longitudinal direction, and the lateral direction of the vehicle 100. In this case, detection values detected, measured or determined by the three or more acceleration sensors may be converted into a vertical acceleration $G_z$, a longitudinal acceleration $G_x$, and a lateral acceleration $G_y$ by a geometric technique, so that Equations 16 and 17 above can be used.

In the above-described embodiment, a roll angular velocity sensor offset $b_r$ and a yaw angular velocity sensor offset $b_y$ are estimated by the Kalman filter 80; however, this is not a limitation. Only the roll angular velocity sensor offset $b_r$ may be estimated, or only the yaw angular velocity sensor offset $b_y$ may be estimated, for example. In the case where only the roll angular velocity sensor offset $b_r$ is estimated, calculation may be performed on the assumption that the values of the other sensor offsets are zero. Similarly, in the case where only the yaw angular velocity sensor offset $b_y$ is estimated, calculation may be performed on the assumption that the values of the other sensor offsets are zero.

Although the above-described embodiment estimates a vertical acceleration sensor offset $b_z$, this is not a limitation. An offset error of the longitudinal acceleration sensor 54 may be estimated, or an offset error of the lateral acceleration sensor 55 may be estimated.

Although the above-described embodiment employs rear-wheel speed $V_r$ as one of the input parameters of the Kalman filter 80, this is not a limitation. Vehicle speed as detected by a velocity sensor, which is capable of measuring the velocity of travel (vehicle speed) of the vehicle 100, may be used as one of the input parameters of the Kalman filter 80.

In the above-described embodiment, the Kalman filter 80 estimates vehicle speed $V_x$. However, in the case where, for example, a velocity sensor detects vehicle speed, the Kalman filter 80 does not need to estimate vehicle speed $V_x$.

Although the Kalman filter 80 is realized by the ECU 20 and a computer program in the above-described embodiment, this is not a limitation. Some or all functions of the Kalman filter 80 may be implemented by hardware, e.g., an electronic circuit.

Instead of the Kalman filter 80 in the above-described embodiment, any other adaptive filtering technique may be used. For example, a least mean square (LMS) adaptive filter, H∞ filtering, or the like may be used. Although the roll angle estimation device 10 is applied to a motorcycle in the above-described embodiment, this is not a limitation. The roll angle estimation device 10 is applicable to various transport apparatuses, such a saddle-ride, straddle-type vehicle, or saddle-straddling type motor vehicle, or any other vehicle, such as four-wheeled or three-wheeled automobiles or other vehicles, or marine vessels.

In the above-described embodiment, the roll angle $\phi$, which is estimated by the roll angle estimation device 10, is used for the navigation system 12 and the headlight driver 15; however, this is not a limitation. The roll angle $\phi$, which is estimated by the roll angle estimation device 10, may be used for various processes, including other control functions of the transport apparatus.

Exemplary correspondence between the component elements of the claims and the elements of the embodiment will be described below. However, the present invention is not limited to the example described below.

In the above-described embodiment, the axis along the longitudinal direction of the vehicle 100 is an example of the first axis; the axis along the vertical direction of the vehicle 100 is an example of the second axis; roll angular velocity $\omega_r$ is an example of the first angular velocity; yaw angular velocity $\omega_y$ is an example of the second angular velocity; the roll angular velocity sensor 51 is an example of the first angular velocity detector; and the yaw angular velocity sensor 52 is an example of the second angular velocity detector.

Moreover, the first direction is an example of the vertical direction of the vehicle 100; the second direction is an example of the longitudinal direction of the vehicle 100; the third direction is an example of the lateral direction of the vehicle 100; vertical acceleration $G_z$ is an example of the first acceleration; longitudinal acceleration $G_x$ is an example of the second acceleration; lateral acceleration $G_y$ is an example of the third acceleration; the vertical acceleration sensor 53 is an example of the first acceleration detector; the longitudinal acceleration sensor 54 is an example of the second acceleration detector; and the lateral acceleration sensor 55 is an example of the third acceleration detector.

Furthermore, the rear-wheel speed $V_r$ or front-wheel speed $V_f$ is an example of the information concerning or relating to the moving velocity; the rear-wheel speed sensor 7 or the front-wheel speed sensor 6 is an example of the velocity detector; and the ECU 20 is an example of the estimation section, which is also referred to as an arithmetic circuitry.

Moreover, the vehicle 100 or the vehicle body 1 is an example of the moving body; the front wheel 2 is an example of the front wheel; the rear wheel 3 is an example of the rear wheel; the rear-wheel speed sensor 7 is an example of the rear-wheel rotational speed detector; the front-wheel speed sensor 6 is an example of the front-wheel rotational speed detector; and the ECU 20 is an example of the rear-wheel rotational speed estimation section, which is also referred to as rear-wheel rotational speed arithmetic circuitry.

Moreover, each of the low-pass filters 63, 64, and 65 is an example of the respective first, second, and third low-pass filters; and the Kalman filter 80 realized or provided by the ECU 20 and a computer program is an example of the Kalman filter. The navigation system 12 or the headlight driver 15 is an example of the processing device.

Various other elements having the construction or function described in the claims may also be used as component elements of the claims.

The present invention can be used for the estimation of the roll angle of a transport apparatus or the like.

The present invention, or the pertinent component, may take the form of an entirely hardware embodiment, an entirely software embodiment (including firmware,
resident software, micro-code, etc.) or an embodiment combining software and hardware aspects that may all generally be referred to herein as a "circuit," "module" or "system."

It will be appreciated that the term straddle-type vehicle or motor vehicle used herein, and as used in the art, is meant to include the following terms also used in the art:
saddled vehicle, saddle-ride type vehicle or motor vehicle, saddle-straddling type vehicle or motor vehicle, and includes:
preferably motorcycles, motorbikes, scooters and mopeds as well as motor tricycles and All-Terrain Vehicles (ATVs) and snow mobiles.

## Claims

1.   A roll angle estimation device (10) for estimating a roll angle of a moving body (1; 100), comprising:

   first and second angular velocity detectors (51, 52) for detecting respective first and second angular velocities ($\omega_r$, $\omega_y$) around first and second axes extending along at least two mutually different directions;
   first, second, and third acceleration detectors (53, 54, 55) for detecting respective first, second, and third accelerations along at least three mutually different directions;
   a velocity information detector (6; 7) for detecting information concerning a moving velocity ($V_r$, $V_f$) of the moving body (1; 100) in a direction of travel; and
   an estimation section (20) configured to estimate a roll angle, a pitch angle and a pitch angular velocity of the moving body (1; 100) and at least one offset error of the first and second angular velocity detectors (51, 52) and the first, second, and third acceleration detectors, wherein,
   in a current estimation operation, the estimation section (20) estimates the roll angle, pitch angle, and pitch angular velocity of the moving body (1; 100) and the at least one offset error, based on: detection values detected by the first and second angular velocity detectors (51, 52); detection values detected by the first, second, and third acceleration detectors; a detection value detected by the velocity information detector (6; 7); estimated values of the roll angle, pitch angle, and pitch angular velocity from a previous estimation operation; and an estimated value of the offset error from the previous estimation operation.

2.   The roll angle estimation device (10) of claim 1, wherein,
   the first and second angular velocity detectors detect a respective roll angular velocity ($\omega_r$) and a respective yaw angular velocity ($\omega_y$); and
   the first, second, and third acceleration detectors (53, 54, 55) detect respective first, second, and third accelerations along three mutually different directions.

3.   The roll angle estimation device (10) of claim 1, wherein, in the current estimation operation, the estimation section (20) estimates a pitch angle based on the estimated value of the pitch angular velocity resulting from the previous estimation operation, and estimates a pitch angular velocity based on the estimated value of the pitch angular velocity resulting from the previous estimation operation.

4.   The roll angle estimation device (10) of claim 1, wherein, in the current estimation operation, the estimation section (20) estimates a pitch angle based on a value obtained by integrating the estimated value of the pitch angular velocity from the previous estimation operation over a time interval between the current estimation operation and the previous estimation operation, and estimates a pitch angular velocity based on a value obtained by integrating the estimated value of the pitch angular velocity from the previous estimation operation with a constant containing a time constant.

5.   The roll angle estimation device (10) of any of claims 1 to 4, wherein the estimation section (20) comprises a Kalman filter (80) which, in the current estimation operation, estimates the roll angle, pitch angle, and pitch angular velocity of the moving body (1; 100) and the at least one offset error based on a relationship among: detection values detected by the first and second angular velocity detectors (51, 52); detection values detected by the first, second, and third acceleration detectors (53, 54, 55); a detection value detected by the velocity information detector (6; 7); estimated values of the roll angle, pitch angle, and pitch angular velocity resulting from a previous estimation operation; and an estimated value of the offset error resulting from the previous estimation operation.

6.   The roll angle estimation device (10) of claim 5, wherein the Kalman filter (80) comprises a saturation limiting circuit which sets the estimated value to the upper limit value, when any estimated value exceeds an upper limit value of a predetermined range, and sets the estimated value to the lower limit value, when any estimated value is lower than a lower limit value of the predetermined range.

7. The roll angle estimation device (10) of claim 6, the saturation limiting circuit sets the estimated value to the upper limit value, when any estimated value exceeds an upper limit value of a predetermined range, and the saturation limiting circuit sets the estimated value to the lower limit value at least with respect to the estimated values of the roll angle, the pitch angle, and an offset error of pitch angular velocity, when any estimated value is lower than a lower limit value of the predetermined range.

8. The roll angle estimation device (10) of claim 5, wherein the estimation section (20) includes low-pass filters (63, 64, 65), which receive outputs from the first and second angular velocity detectors (51, 52), the first, second, and third acceleration detectors (53, 54, 55), and the velocity information detector (6; 7), and treats the outputs, which have been transmitted through the low-pass filters (63, 64, 65) as the detection values of the respective first and second angular velocity detectors (51, 52), the respective first, second, and third accelerations detector (53, 54, 55), and the respective velocity information detector (6; 7).

9. The roll angle estimation device (10) of any of claims 1 to 8, wherein,
the moving body (1; 100) comprises a front wheel (2) and a rear wheel (3);
the velocity information detector (6; 7) includes a rear-wheel rotational speed detector (7) which detects a rotational speed of the rear wheel (3) as the information; and
the estimation section (20) is configured to further estimate a moving velocity of the moving body (1; 100), and, in the current estimation operation, the estimation section (20) estimates the roll angle of the moving body (1; 100), the at least one offset error, and the moving velocity of the moving body (1; 100), based on: detection values detected by the first and second angular velocity detectors (51, 52); detection values detected by the first, second, and third acceleration detectors (53, 54, 55); a detection value detected by the rear-wheel speed detector; an estimated value of the roll angle resulting from a previous estimation operation; an estimated value of the offset error resulting from the previous estimation operation; and an estimated value of the moving velocity resulting from the previous estimation operation.

10. The roll angle estimation device (10) of any of claims 1 to 8, wherein,
the moving body (1; 100) comprises a front wheel (2) and a rear wheel (3);
the velocity information detector (6; 7) includes
a front-wheel rotational speed detector (6) which detects a rotational speed of the front wheel (2), and
a rear-wheel rotational speed estimation section (20) which estimates a rotational speed of the rear wheel (3) from a detection value by the front-wheel rotational speed detector (6) as the information; and
the estimation section (20) is configured to further estimate a moving velocity of the moving body (1; 100), and, in the current estimation operation, the estimation section (20) estimates the roll angle of the moving body (1; 100), the at least one offset error, and the moving velocity of the moving body (1; 100), based on: detection values detected by the first and second angular velocity detectors (51, 52); detection values detected by the first, second, and third acceleration detectors (53, 54, 55); an estimated value determined by the rear-wheel rotational speed estimation section (20); an estimated value of the roll angle resulting from a previous estimation operation; an estimated value of the offset error resulting from the previous estimation operation; and an estimated value of the moving velocity resulting from the previous estimation operation.

11. A transport apparatus comprising:

a body (1; 100) configured to be capable of moving;
the roll angle estimation device (10) of any of claims 1 to 10 for estimating a roll angle of the moving body (1; 100); and
a processing device configured to receive the roll angle estimated by the roll angle estimation device and to use the estimated roll angle for control functions of the transport apparatus.

12. The transport apparatus of claim 11, wherein the moving body (1; 100) is a vehicle (100), such as a straddle-type vehicle or saddle-ride type vehicle, or a vehicle body (1) of a vehicle (100), such as a straddle-type vehicle or saddle-ride type vehicle.

13. The transport apparatus of claim 11 or 12, wherein the processing device comprises or is comprised in a navigation system (12) and/or a headlight driver (15).

**14.** A method for estimating a roll angle of a moving body (1; 100), the method comprising:
providing a roll angle estimation device (10);

detecting first and second angular velocities around first and second axes along at least two mutually different directions using respective first and second angular velocity detectors (51, 52) of the roll angle estimation device (10);

detecting first, second, and third accelerations along at least three mutually different directions using respective first, second and third acceleration detectors (53, 54, 55) of the roll angle estimation device (10);

detecting information concerning a moving velocity ($V_r$, $V_f$) of the moving body (1; 100) in a direction of travel using a velocity information detector (6; 7) of the roll angle estimation device (10); and

estimating a roll angle, a pitch angle and a pitch angular velocity of the moving body (1; 100) and at least one offset error of the first and second angular velocity detectors and the first, second, and third acceleration detectors using an estimation section (20) using an estimation section of the roll angle estimation device (10), wherein, in a current estimation operation, the estimation section (20) estimates the roll angle, pitch angle, and pitch angular velocity of the moving body (1; 100) and the at least one offset error, based on: detection values detected by the first and second angular velocity detectors; detection values detected by the first, second, and third acceleration detectors; a detection value detected by the velocity information detector (6; 7); estimated values of the roll angle, pitch angle, and pitch angular velocity from a previous estimation operation; and an estimated value of the offset error from the previous estimation operation.

**15.** A computer program product, wherein the computer program product is comprised in or programmed into the processing device of the transport apparatus according to any one of claims 11 to 13.

**Patentansprüche**

**1.** Wankwinkelschätzvorrichtung (10) zum Schätzen eines Wankwinkels eines sich bewegenden Körpers (1; 100), umfassend:

einen ersten und einen zweiten Winkelgeschwindigkeitsdetektor (51, 52) zum Erfassen einer jeweiligen ersten und zweiten Winkelgeschwindigkeit ($\omega_r$, $\omega_y$) um eine erste und eine zweite Achse, die sich entlang mindestens zweier voneinander verschiedener Richtungen erstrecken;

einen ersten, einen zweiten und einen dritten Beschleunigungsdetektor (53, 54, 55) zum Erfassen einer jeweiligen ersten, zweiten und dritten Beschleunigung entlang mindestens dreier voneinander verschiedener Richtungen;

einen Geschwindigkeitsinformationsdetektor (6; 7) zum Erfassen von Informationen betreffend eine Bewegungsgeschwindigkeit ($V_r$, $V_f$) des sich bewegenden Körpers (1; 100) in einer Fahrtrichtung; und

einen Schätzabschnitt (20), der konfiguriert ist, um einen Wankwinkel, einen Nickwinkel und eine Nickwinkelgeschwindigkeit des sich bewegenden Körpers (1; 100) und mindestens einen Offsetfehler des ersten und zweiten Winkelgeschwindigkeitsdetektors (51, 52) und des ersten, zweiten und dritten Beschleunigungsdetektors zu schätzen, wobei

in einem laufenden Schätzvorgang der Schätzabschnitt (20) den Wankwinkel, den Nickwinkel und die Nickwinkelgeschwindigkeit des sich bewegenden Körpers (1; 100) und den mindestens einen Offsetfehler schätzt basierend auf: Erfassungswerten, die durch den ersten und den zweiten Winkelgeschwindigkeitsdetektor (51, 52) erfasst wurden; Erfassungswerten, die durch den ersten, zweiten und dritten Beschleunigungsdetektor erfasst wurden; einem Erfassungswert, der durch den Geschwindigkeitsinformationsdetektor (6; 7) erfasst wurde; Schätzwerten des Wankwinkels, des Nickwinkels und der Nickwinkelgeschwindigkeit aus einem vorherigen Schätzvorgang; und einem Schätzwert des Offsetfehlers aus dem vorherigen Schätzvorgang.

**2.** Wankwinkelschätzvorrichtung (10) nach Anspruch 1, wobei
der erste und der zweite Winkelgeschwindigkeitsdetektor eine jeweilige Wankwinkelgeschwindigkeit ($\omega_r$) und eine jeweilige Gierwinkelgeschwindigkeit ($\omega_y$) erfassen; und
der erste, zweite und dritte Beschleunigungsdetektor (53, 54, 55) eine jeweilige erste, zweite und dritte Beschleunigung entlang dreier voneinander verschiedener Richtungen erfassen.

**3.** Wankwinkelschätzvorrichtung (10) nach Anspruch 1, wobei der Schätzabschnitt (20) in dem laufenden Schätzvorgang einen Nickwinkel basierend auf dem Schätzwert der Nickwinkelgeschwindigkeit schätzt, der aus dem vorherigen Schätzvorgang resultiert, und eine Nickwinkelgeschwindigkeit basierend auf dem Schätzwert der Nickwinkelgeschwindigkeit schätzt, der aus dem vorherigen Schätzvorgang resultiert.

4. Wankwinkelschätzvorrichtung (10) nach Anspruch 1, wobei der Schätzabschnitt (20) in dem laufenden Schätzvorgang einen Nickwinkel schätzt basierend auf einem Wert, der durch Integrieren des Schätzwerts der Nickwinkelgeschwindigkeit aus dem vorherigen Schätzvorgang über eine Zeitspanne zwischen dem laufenden Schätzvorgang und dem vorherigen Schätzvorgang erhalten wurde, und eine Nickwinkelgeschwindigkeit schätzt basierend auf einem Wert, der durch Integrieren des Schätzwerts der Nickwinkelgeschwindigkeit aus dem vorherigen Schätzvorgang mit einer eine Zeitkonstante enthaltenden Konstante erhalten wurde.

5. Wankwinkelschätzvorrichtung (10) nach einem der Ansprüche 1 bis 4, wobei der Schätzabschnitt (20) einen Kalman-Filter (80) umfasst, der in dem laufenden Schätzvorgang den Wankwinkel, den Nickwinkel, und die Nickwinkelgeschwindigkeit des sich bewegenden Körpers (1; 100) und den mindestens einen Offsetfehler schätzt basierend auf einer Beziehung zwischen: Erfassungswerten, die durch den ersten und den zweiten Winkelgeschwindigkeitsdetektor (51, 52) erfasst wurden; Erfassungswerten, die durch den ersten, zweiten und dritten Beschleunigungsdetektor (53, 54, 55) erfasst wurden; einem Erfassungswert, der durch den Geschwindigkeitsinformationsdetektor (6; 7) erfasst wurde; Schätzwerten des Wankwinkels, des Nickwinkels und der Nickwinkelgeschwindigkeit, die aus einem vorherigen Schätzvorgang resultieren; und einem Schätzwert des Offsetfehlers, der aus dem vorherigen Schätzvorgang resultiert.

6. Wankwinkelschätzvorrichtung (10) nach Anspruch 5, wobei der Kalman-Filter (80) eine Sättigungsbegrenzungsschaltung umfasst, die den Schätzwert auf den oberen Grenzwert setzt, wenn irgendein Schätzwert einen oberen Grenzwert eines vorbestimmten Bereichs überschreitet, und den Schätzwert auf den unteren Grenzwert setzt, wenn irgendein Schätzwert niedriger als ein unterer Grenzwert des vorbestimmten Bereichs ist.

7. Wankwinkelschätzvorrichtung (10) nach Anspruch 6, wobei die Sättigungsbegrenzungsschaltung den Schätzwert auf den oberen Grenzwert setzt, wenn irgendein Schätzwert einen oberen Grenzwert eines vorbestimmten Bereichs überschreitet, und die Sättigungsbegrenzungsschaltung den Schätzwert auf den unteren Grenzwert zumindest in Bezug auf die Schätzwerte des Wankwinkels, des Nickwinkels und eines Offsetfehlers der Nickwinkelgeschwindigkeit setzt, wenn irgendein Schätzwert niedriger als ein unterer Grenzwert des vorbestimmten Bereichs ist.

8. Wankwinkelschätzvorrichtung (10) nach Anspruch 5, wobei der Schätzabschnitt (20) Tiefpassfilter (63, 64, 65) umfasst, die Ausgänge von dem ersten und dem zweiten Winkelgeschwindigkeitsdetektor (51, 52), dem ersten, zweiten und dritten Beschleunigungsdetektor (53, 54, 55) und dem Geschwindigkeitsinformationsdetektor (6; 7) empfangen, und die Ausgänge, die durch die Tiefpassfilter (63, 64, 65) übermittelt wurden, als Erfassungswerte des jeweiligen ersten und zweiten Winkelgeschwindigkeitsdetektor (51, 52), des jeweiligen ersten, zweiten und dritten Beschleunigungsdetektor (53, 54, 55) und des jeweiligen Geschwindigkeitsinformationsdetektors (6; 7) behandelt.

9. Wankwinkelschätzvorrichtung (10) nach einem der Ansprüche 1 bis 8, wobei
der sich bewegende Körper (1; 100) ein Vorderrad (2) und ein Hinterrad (3) umfasst;
wobei der Geschwindigkeitsinformationsdetektor (6; 7) einen HinterradDrehzahldetektor (7) umfasst, der eine Drehzahl des Hinterrades (3) als die Information erfasst; und
der Schätzabschnitt (20) konfiguriert ist, eine Bewegungsgeschwindigkeit des sich bewegenden Körpers (1; 100) zu schätzen, und der Schätzabschnitt (20) in dem laufenden Schätzvorgang den Wankwinkel des sich bewegenden Körpers (1; 100), den mindestens einen Offsetfehler und die Bewegungsgeschwindigkeit des sich bewegenden Körpers (1; 100) schätzt basierend auf: Erfassungswerten, die durch den ersten und zweiten Winkelgeschwindigkeitsdetektor (51, 52) erfasst wurden; Erfassungswerten, die durch den ersten, zweiten und dritten Beschleunigungsdetektor (53, 54, 55) erfasst wurden; einen Erfassungswert, der durch den Hinterraddrehzahldetektor erfasst wurde; einen Schätzwert des Wankwinkels, der aus einem vorherigen Schätzvorgang resultiert; einen Schätzwert des Offsetfehlers, der aus dem vorherigen Schätzvorgang resultiert; und einen Schätzwert der Bewegungsgeschwindigkeit, die aus dem vorherigen Schätzvorgang resultiert.

10. Wankwinkelschätzvorrichtung (10) nach einem der Ansprüche 1 bis 8, wobei
der sich bewegende Körper (1; 100) ein Vorderrad (2) und ein Hinterrad (3) umfasst;
der Geschwindigkeitsinformationsdetektor (6; 7)
einen Vorderrad-Drehzahldetektor (6), der eine Drehzahl des Vorderrades (2) erfasst, und
einen Hinterrad-Drehzahlschätzabschnitt (20), der eine Drehzahl des Hinterrades (3) aus einem Erfassungswert durch den Vorderrad-Drehzahldetektor (6) als Information schätzt, enthält; und

der Schätzabschnitt (20) konfiguriert ist, eine Bewegungsgeschwindigkeit des sich bewegenden Körpers (1; 100) zu schätzen, und der Schätzabschnitt (20) in dem laufenden Schätzvorgang den Wankwinkel des sich bewegenden Körpers (1; 100), den mindestens einen Offsetfehler und die Bewegungsgeschwindigkeit des sich bewegenden Körpers (1; 100) schätzt basierend auf: Erfassungswerten, die durch den ersten und zweiten Winkelgeschwindigkeitsdetektor (51, 52) erfasst wurde; Erfassungswerten, die durch den ersten, zweiten und dritten Beschleunigungsdetektor (53, 54, 55) erfasst wurden; einem Schätzwert, der durch den Hinterrad-Drehzahlabschätzabschnitt (20) bestimmt wurde; einen Schätzwert des Wankwinkels, der aus einem vorherigen Schätzvorgang resultiert; einen Schätzwert des Offsetfehlers, der aus dem vorherigen Schätzvorgang resultiert; und einen Schätzwert der Bewegungsgeschwindigkeit, die aus dem vorherigen Schätzvorgang resultiert.

11. Transportvorrichtung, umfassend:

einen Körper (1; 100), der konfiguriert ist, um in der Lage zu sein, sich zu bewegen;
die Wankwinkelschätzvorrichtung (10) nach einem der Ansprüche 1 bis 10 zum Schätzen eines Wankwinkels des sich bewegenden Körpers (1; 100); und
eine Verarbeitungsvorrichtung, die konfiguriert ist, um den von der Wankwinkelschätzvorrichtung geschätzten Wankwinkel zu empfangen und den geschätzten Wankwinkel für Steuerfunktionen der Transportvorrichtung zu verwenden.

12. Transportvorrichtung nach Anspruch 11, wobei sich der sich bewegende Körper (1; 100) ein Fahrzeug (100), wie z. B. ein Grätschsitzfahrzeug oder ein Aufsitzfahrzeug, oder eine Fahrzeugkarosserie (1) eines Fahrzeugs (100), wie z. B. eines Grätschsitzfahrzeugs oder eines Aufsitzfahrzeugs, ist.

13. Transportvorrichtung nach Anspruch 11 oder 12, wobei die Verarbeitungsvorrichtung ein Navigationssystem (12) und/oder einen Scheinwerfertreiber (15) umfasst oder darin enthalten ist.

14. Verfahren zum Schätzen eines Wankwinkels eines sich bewegenden Körpers (1; 100), wobei das Verfahren umfasst:

Bereitstellen einer Wankwinkelschätzvorrichtung (10);
Erfassen einer ersten und einer zweiten Winkelgeschwindigkeit um eine erste und eine zweite Achse entlang mindestens zweier voneinander verschiedener Richtungen unter Verwendung eines jeweiligen ersten und zweiten Winkelgeschwindigkeitsdetektors (51, 52) der Wankwinkelschätzvorrichtung (10);
Erfassen einer ersten, zweiten und dritten Beschleunigung entlang mindestens dreier voneinander verschiedener Richtungen unter Verwendung eines jeweiligen ersten, zweiten und dritten Beschleunigungsdetektors (53, 54, 55) der Wankwinkelschätzvorrichtung (10);
Erfassen von Informationen bezüglich einer Bewegungsgeschwindigkeit ($V_r$, $V_f$) des sich bewegenden Körpers (1; 100) in einer Fahrtrichtung unter Verwendung eines Geschwindigkeitsinformationsdetektors (6; 7) der Wankwinkelschätzvorrichtung (10); und
Schätzen eines Wankwinkels, eines Nickwinkels und einer Nickwinkelgeschwindigkeit des sich bewegenden Körpers (1; 100) und mindestens eines Offsetfehlers des ersten und zweiten Winkelgeschwindigkeitsdetektors und des ersten, zweiten und dritten Beschleunigungsdetektors unter Verwendung eines Schätzabschnitts (20) unter Verwendung eines Schätzabschnitts der Wankwinkelschätzvorrichtung (10), wobei
in einem laufenden Schätzvorgang der Schätzabschnitt (20) den Wankwinkel, den Nickwinkel und die Nickwinkelgeschwindigkeit des sich bewegenden Körpers (1; 100) und den mindestens einen Offsetfehler schätzt basierend auf: Erfassungswerten, die durch den ersten und den zweiten Winkelgeschwindigkeitsdetektor erfasst wurden; Erfassungswerten, die durch den ersten, zweiten und dritten Beschleunigungsdetektor erfasst wurden; einem Erfassungswert, der durch den Geschwindigkeitsinformationsdetektor (6; 7) erfasst wurde; Schätzwerten des Wankwinkels, des Nickwinkels und der Nickwinkelgeschwindigkeit aus einem vorherigen Schätzvorgang; und einem Schätzwert des Offsetfehlers aus dem vorherigen Schätzvorgang.

15. Computerprogrammprodukt, wobei das Computerprogrammprodukt in der Verarbeitungsvorrichtung der Transportvorrichtung nach einem der Ansprüche 11 bis 13 enthalten oder in diese programmiert ist.

**Revendications**

1. Dispositif d'estimation d'angle de roulis (10) pour estimer un angle de roulis d'un corps en mouvement (1 ; 100), comprenant :

des premier et second détecteurs de vitesse angulaire (51, 52) destinés à détecter des première et seconde vitesses angulaires respectives ($\omega_r$, $\omega_y$) autour de premier et second axes s'étendant le long d'au moins deux directions mutuellement différentes ;

des premier, deuxième et troisième détecteurs d'accélération (53, 54, 55) destinés à détecter des première, deuxième et troisième accélérations respectives le long d'au moins trois directions mutuellement différentes ;

un détecteur d'informations de vitesse (6 ; 7) destiné à détecter des informations concernant une vitesse de mouvement ($V_r$, $V_f$) du corps en mouvement (1 ; 100) dans une direction de déplacement ; et

une section d'estimation (20) configurée de manière à estimer un angle de roulis, un angle de tangage et une vitesse angulaire de tangage du corps en mouvement (1 ; 100), et au moins une erreur de décalage des premier et second détecteurs de vitesse angulaire (51, 52) et des premier, deuxième et troisième détecteurs d'accélération, dans lequel,

dans le cadre d'une opération d'estimation en cours, la section d'estimation (20) estime l'angle de roulis, l'angle de tangage et la vitesse angulaire de tangage du corps en mouvement (1 ; 100) et ladite au moins une erreur de décalage, sur la base : de valeurs de détection détectées par les premier et second détecteurs de vitesse angulaire (51, 52) ; de valeurs de détection détectées par les premier, deuxième et troisième détecteurs d'accélération ; d'une valeur de détection détecté par le détecteur d'informations de vitesse (6 ; 7) ; de valeurs estimées de l'angle de roulis, de l'angle de tangage, et de la vitesse angulaire de tangage, provenant d'une opération d'estimation antérieure ; et d'une valeur estimée de l'erreur de décalage provenant de l'opération d'estimation antérieure.

2. Dispositif d'estimation d'angle de roulis (10) selon la revendication 1, dans lequel,

les premier et second détecteurs de vitesse angulaire détectent une vitesse angulaire de roulis respective ($\omega_r$) et une vitesse angulaire de lacet respective ($\omega_y$) ; et

les premier, deuxième et troisième détecteurs d'accélération (53, 54, 55) détectent des première, deuxième et troisième accélérations respectives le long de trois directions mutuellement différentes.

3. Dispositif d'estimation d'angle de roulis (10) selon la revendication 1, dans lequel, dans le cadre de l'opération d'estimation en cours, la section d'estimation (20) estime un angle de tangage sur la base de la valeur estimée de la vitesse angulaire de tangage résultant de l'opération d'estimation antérieure, et estime une vitesse angulaire de tangage sur la base de la valeur estimée de la vitesse angulaire de tangage résultant de l'opération d'estimation antérieure.

4. Dispositif d'estimation d'angle de roulis (10) selon la revendication 1, dans lequel, dans le cadre de l'opération d'estimation en cours, la section d'estimation (20) estime un angle de tangage sur la base d'une valeur obtenue en intégrant la valeur estimée de la vitesse angulaire de tangage provenant de l'opération d'estimation antérieure sur un intervalle de temps entre l'opération d'estimation en cours et l'opération d'estimation antérieure, et estime une vitesse angulaire de tangage sur la base d'une valeur obtenue en intégrant la valeur estimée de la vitesse angulaire de tangage provenant de l'opération d'estimation antérieure avec une constante contenant une constante de temps.

5. Dispositif d'estimation d'angle de roulis (10) selon l'une quelconque des revendications 1 à 4, dans lequel la section d'estimation (20) comprend un filtre de Kalman (80) qui, dans le cadre de l'opération d'estimation en cours, estime l'angle de roulis, l'angle de tangage et la vitesse angulaire de tangage du corps en mouvement (1 ; 100) et ladite au moins une erreur de décalage, sur la base d'une relation entre : des valeurs de détection détectées par les premier et second détecteurs de vitesse angulaire (51, 52) ; des valeurs de détection détectées par les premier, deuxième et troisième détecteurs d'accélération (53, 54, 55) ; une valeur de détection détecté par le détecteur d'informations de vitesse (6 ; 7) ; des valeurs estimées de l'angle de roulis, de l'angle de tangage et de la vitesse angulaire de tangage résultant d'une opération d'estimation antérieure ; et une valeur estimée de l'erreur de décalage résultant de l'opération d'estimation antérieure.

6. Dispositif d'estimation d'angle de roulis (10) selon la revendication 5, dans lequel le filtre de Kalman (80) comprend un circuit limiteur de saturation qui définit la valeur estimée sur la valeur limite supérieure, lorsqu'une quelconque valeur estimée dépasse une valeur limite supérieure d'une plage prédéterminée, et qui définit la valeur estimée sur la valeur limite inférieure, lorsqu'une quelconque valeur estimée est inférieure à une valeur limite inférieure de la plage prédéterminée.

7. Dispositif d'estimation d'angle de roulis (10) selon la revendication 6, dans lequel le circuit limiteur de saturation définit la valeur estimée sur la valeur limite supérieure, lorsqu'une quelconque valeur estimée dépasse une valeur limite supérieure d'une plage prédéterminée, et dans lequel le circuit limiteur de saturation définit la valeur estimée sur la valeur limite inférieure au moins par rapport aux valeurs estimées de l'angle de roulis, de l'angle de tangage, et à une erreur de décalage de vitesse angulaire de tangage, lorsqu'une quelconque valeur estimée est inférieure à une valeur limite inférieure de la plage prédéterminée.

8. Dispositif d'estimation d'angle de roulis (10) selon la revendication 5, dans lequel la section d'estimation (20) inclut des filtres passe-bas (63, 64, 65) qui reçoivent des sorties en provenance des premier et second détecteurs de vitesse angulaire (51, 52), des premier, deuxième et troisième détecteurs d'accélération (53, 54, 55), et du détecteur d'informations de vitesse (6 ; 7), et elle traite les sorties qui ont été transmises à travers les filtres passe-bas (63, 64, 65) en tant que les valeurs de détection des premier et second détecteurs de vitesse angulaire respectifs (51, 52), des premier, deuxième et troisième détecteurs d'accélération respectifs (53, 54, 55) et du détecteur d'informations de vitesse respectif (6 ; 7).

9. Dispositif d'estimation d'angle de roulis (10) selon l'une quelconque des revendications 1 à 8, dans lequel, le corps en mouvement (1 ; 100) comprend une roue avant (2) et une roue arrière (3) ; le détecteur d'informations de vitesse (6 ; 7) inclut un détecteur de vitesse de rotation de roue arrière (7) qui détecte une vitesse de rotation de la roue arrière (3) sous la forme d'informations ; et la section d'estimation (20) est configurée de manière à estimer en outre une vitesse de mouvement du corps en mouvement (1 ; 100), et, dans le cadre de l'opération d'estimation en cours, la section d'estimation (20) estime l'angle de roulis du corps en mouvement (1 ; 100), ladite au moins une erreur de décalage, et la vitesse de mouvement du corps en mouvement (1 ; 100), sur la base : de valeurs de détection détectées par les premier et second détecteurs de vitesse angulaire (51, 52) ; de valeurs de détection détectées par les premier, deuxième et troisième détecteurs d'accélération (53, 54, 55) ; d'une valeur de détection détectée par le détecteur de vitesse de rotation de roue arrière ; d'une valeur estimée de l'angle de roulis résultant d'une opération d'estimation antérieure ; d'une valeur estimée de l'erreur de décalage résultant de l'opération d'estimation antérieure ; et d'une valeur estimée de la vitesse de mouvement résultant de l'opération d'estimation antérieure.

10. Dispositif d'estimation d'angle de roulis (10) selon l'une quelconque des revendications 1 à 8, dans lequel, le corps en mouvement (1 ; 100) comprend une roue avant (2) et une roue arrière (3) ; le détecteur d'informations de vitesse (6 ; 7) inclut :

un détecteur de vitesse de rotation de roue avant (6) qui détecte une vitesse de rotation de la roue avant (2) ; et une section d'estimation de vitesse de rotation de roue arrière (20) qui estime une vitesse de rotation de la roue arrière (3) à partir d'une valeur de détection détectée par le détecteur de vitesse de rotation de roue avant (6), sous la forme d'informations ; et

dans lequel la section d'estimation (20) est configurée de manière à estimer en outre une vitesse de mouvement du corps en mouvement (1 ; 100), et, dans le cadre de l'opération d'estimation en cours, la section d'estimation (20) estime l'angle de roulis du corps en mouvement (1 ; 100), ladite au moins une erreur de décalage, et la vitesse de mouvement du corps en mouvement (1 ; 100), sur la base : de valeurs de détection détectées par les premier et second détecteurs de vitesse angulaire (51, 52) ; de valeurs de détection détectées par les premier, deuxième et troisième détecteurs d'accélération (53, 54, 55) ; d'une valeur estimée déterminée par la section d'estimation de vitesse de rotation de roue arrière (20) ; d'une valeur estimée de l'angle de roulis résultant d'une opération d'estimation antérieure ; d'une valeur estimée de l'erreur de décalage résultant de l'opération d'estimation antérieure ; et d'une valeur estimée de la vitesse de mouvement résultant de l'opération d'estimation antérieure.

11. Appareil de transport comprenant :

un corps (1 ; 100) configuré de manière à être en mesure de se déplacer ; le dispositif d'estimation d'angle de roulis (10) selon l'une quelconque des revendications 1 à 10, destiné à estimer un angle de roulis du corps en mouvement (1 ; 100) ; et un dispositif de traitement configuré de manière à recevoir l'angle de roulis estimé par le dispositif d'estimation d'angle de roulis et à utiliser l'angle de roulis estimé pour des fonctions de commande de l'appareil de transport.

12. Appareil de transport selon la revendication 11, dans lequel le corps en mouvement (1 ; 100) est un véhicule (100), par exemple un véhicule de type à selle ou un véhicule de type à monture à selle, ou un corps de véhicule (1) d'un véhicule (100), par exemple d'un véhicule de type à selle ou un véhicule de type à monture à selle.

13. Appareil de transport selon la revendication 11 ou 12, dans lequel le dispositif de traitement comprend ou est compris dans un système de navigation (12) et/ou dans un module de commande de phare avant (15).

14. Procédé d'estimation d'un angle de roulis d'un corps en mouvement (1 ; 100), le procédé comprenant les étapes ci-dessous consistant à :

fournir un dispositif d'estimation d'angle de roulis (10) ;
détecter des première et seconde vitesses angulaires autour de premier et second axes s'étendant le long d'au moins deux directions mutuellement différentes en utilisant des premier et second détecteurs de vitesse angulaire (51, 52) du dispositif d'estimation d'angle de roulis (10) ;
détecter des première, deuxième et troisième accélérations le long d'au moins trois directions mutuellement différentes en utilisant des premier, deuxième et troisième détecteurs d'accélération (53, 54, 55) respectifs du dispositif d'estimation d'angle de roulis (10) ;
détecter des informations concernant une vitesse de mouvement ($V_r$, $V_f$) du corps en mouvement (1 ; 100) dans une direction de déplacement, en utilisant un détecteur d'informations de vitesse (6 ; 7) du dispositif d'estimation d'angle de roulis (10) ; et
estimer un angle de roulis, un angle de tangage et une vitesse angulaire de tangage du corps en mouvement (1 ; 100), et au moins une erreur de décalage des premier et second détecteurs de vitesse angulaire et des premier, deuxième et troisième détecteurs d'accélération, en utilisant une section d'estimation (20) du dispositif d'estimation d'angle de roulis (10), dans lequel
dans le cadre d'une opération d'estimation en cours, la section d'estimation (20) estime l'angle de roulis, l'angle de tangage et la vitesse angulaire de tangage du corps en mouvement (1 ; 100) et ladite au moins une erreur de décalage, sur la base : de valeurs de détection détectées par les premier et second détecteurs de vitesse angulaire ; de valeurs de détection détectées par les premier, deuxième et troisième détecteurs d'accélération ; d'une valeur de détection détectée par le détecteur d'informations de vitesse (6 ; 7) ; de valeurs estimées de l'angle de roulis, de l'angle de tangage, et de la vitesse angulaire de tangage, provenant d'une opération d'estimation antérieure ; et d'une valeur estimée de l'erreur de décalage provenant de l'opération d'estimation antérieure.

15. Produit-programme informatique, dans lequel le produit-programme informatique est compris ou programmé dans le dispositif de traitement de l'appareil de transport selon l'une quelconque des revendications 11 à 13.

Figure 1

Figure 2

$y(G_z, G_y, v_r)$

$u$

$u = U(\dot{\omega}_r, \omega_r, \dot{\omega}_y, \omega_y, G_x)$

Figure 3

Figure 4(a)

Figure 4(b)

Figure 5

Figure 6(a)

Figure 6(b)

Figure 7(a)

Figure 7(b)

EP 2 937 255 B1

Figure 7(c)

Figure 8

Figure 9

Figure 10

**EP 2 937 255 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009073466 A
- US 20110040464 A
- EP 2517941 A
- US 20100168958 A